Europäisches Patentamt

European Patent Office

Office européen des brevets

(19)

(11) EP 0 447 541 B1

(12) EUROPEAN PATENT SPECIFICATION

(45) Date of publication and mention
of the grant of the patent:
**10.06.1998 Bulletin 1998/24**

(21) Application number: **90916429.5**

(22) Date of filing: **04.10.1990**

(51) Int Cl.⁶: **G06T 1/20**

(86) International application number:
**PCT/US90/05676**

(87) International publication number:
**WO 91/06065 (02.05.1991 Gazette 1991/10)**

(54) **IMAGE DATA PROCESSOR SYSTEM AND METHOD**

BILDDATENVERARBEITUNGSSYSTEM UND METHODE

SYSTEME ET METHODE DE TRAITEMENT D'IMAGES

(84) Designated Contracting States:
**DE FR GB**

(30) Priority: **10.10.1989 US 419270**
**10.10.1989 US 419530**
**10.10.1989 US 419594**
**10.10.1989 US 419595**
**10.10.1989 US 420779**

(43) Date of publication of application:
**25.09.1991 Bulletin 1991/39**

(73) Proprietor: **UNISYS CORPORATION**
**Blue Bell Pennsylvania 19424 (US)**

(72) Inventors:
 • KLEIN, Robert
 Farmington, MI 48018 (US)
 • D'AOUST, Robert
 Detroit, MI 48228 (US)
 • GROSSE, Debora, Y.
 Ann Arbor, MI 48108 (US)
 • REASONER, George, E., Jr.
 Tecumseh, MI 49286 (US)
 • WILLIAMS, David, C.
 Ann Arbor, MI 48015 (US)
 • ROPPO, Antonette, M.
 West Bloomfield, MI 48322 (US)
 • BRENNAN, Audrey, A.
 Northville, MI 48167 (US)
 • JENNINGS, Kevin
 Farmington Hills, MI 48024 (US)

(74) Representative: **Eisenführ, Speiser & Partner**
**Martinistrasse 24**
**28195 Bremen (DE)**

(56) References cited:
EP-A- 0 033 623        EP-A- 0 051 227
EP-A- 0 055 834        EP-A- 0 105 707
EP-A- 0 156 344        EP-A- 0 165 045
EP-A- 0 190 727        EP-A- 0 336 430
EP-A- 0 343 927        EP-A- 0 398 501
FR-A- 2 633 747        GB-A- 2 090 818
GB-A- 2 166 921        GB-A- 2 177 567
GB-A- 2 214 038        US-A- 4 541 116
US-A- 4 933 775

 • PATENT ABSTRACTS OF JAPAN, vol. 12, no.
 207 (E-621), 14 June 1988; & JP,A,63 005 659
 (FUJI XEROX CO., LTD) 11 January 1988
 • IBM Technical Disclosure Bulletin, vol. 31, no. 9,
 February 1989, (Armonk, NY, US), "Image
 system quality and data compression
 enhancement by excision of isolated single pels
 and quad pel groups", pages 235-236
 • PATENT ABSTRACTS OF JAPAN, vol. 92, no. 10
 (P-383), 28 August 1985; & JP,A,60 072 078
 (TOSHIBA K.K.) 24 April 1985

EP 0 447 541 B1

## Description

## BACKGROUND OF THE INVENTION

### Field of the Invention

This invention relates to the processing of video image data and, more particularly, to a method and apparatus for the processing of video image data associated with a document imaging system.

Financial documents, such as check or drafts, usually contain a plurality of characters printed in magnetic ink which are typically read by a sorter which automatically sorts these documents to a plurality of bins. Prior to sorting, these documents are physically handled by a plurality of individuals, each of who enters the dollar amount associated therewith upon the document by the use of specialized amount entry equipment. Additionally, these individuals physically enter any corrections, associated with the reading of the magnetic code, upon each of the sorted documents.

EP-A-0033623 discloses a method and an apparatus for reducing the gray scale resolution of a document, such as a cheque or deposit slip. This apparatus includes a scanning module for scanning a document along x and y coordinate regard thereto for generating pixels representing gray scale values for discrete areas of the document along x and y coordinates, with each pixel having a predetermined number of bits. A high pass filter module is also included for summing the associated pixels within a window to produce a window sum as the window is moved relatively along coordinates corresponding to the x and y coordinates, and the high pass filter module also includes means for comparing a selected pixel within a window with the associated window sum and predetermined criteria and for generating first and second output values in accordance therewith. The first and second output values have a fewer number of bits than the associated selected pixel.

JP-A-63005659 describes a document size detector having the purpose to shorten the time required for reading documents in any size and to lighten the burden imposed on a microprocessor by processing signals. In this detector, data outputted from a document reader is inputted to a document length detection part and a document width detection part. The document length detection part processes signals in order to detect the length of documents in a subscan direction, decides the termination of reading when lines decided to be black continue more than the number of set lines and outputs a read information signal to the document reader and the microprocessor and a read line number signal to the microprocessor. The document width detection part processes signals in order to detect the length of documents in a main scan direction, obtains the minimum value among the numbers of continous black picture elements in the right-hand corner of each main scan line based on the data outputted from the document reader, and outputs minimum value data to the microprocessor.

These prior techniques of utilizing a plurality of individuals to process financial documents, in the aforementioned manner has proven to be relatively costly and inefficient in that many of these documents have been lost or destroyed during their physical handling by these individuals. The speed associated with the processing of the documents is also limited to the processing capabilities of the individuals and the particular mechanical amount entry equipment used by them.

In accordance with a first aspect of the present invention, there is provided an image processing system where a document is carried over a track to a station where the document is scanned by a sensor to create digital image data in a memory, said image processing system comprising a plurality of image processor means wherein each image processor means includes: a pixel normalization subprocessor for correcting defects in the sensed image data; a background suppression subprocessor for removing unwanted background from the image; a filtering subprocessor for deleting isolated dark and light spots of predetermined size from the image data; an image scaling subprocessor for reducing the size of the image; a size detection subprocessor for generating an output related to the size of the document; and an input/output controller coupled to said subprocessors for configuring said image processing system in a pipelined assembly so that each image processor means performs one of the functions associated with said subprocessors.

In accordance with a further aspect of the present invention, there is provided a method of processing video image data, comprising the steps of:

carrying a document over a track to a station where the document is scanned by a sensor to create digital image data in a memory;
providing a plurality of image processor means wherein each image processor means includes a pixel normalization subprocessor for correcting defects in the sensed image data, a background suppression subprocessor for removing unwanted background from the image, a filtering subprocessor for deleting isolated dark and light spots of predetermined size from the image data, an image scaling subprocessor for reducing the size of the image, a size detection subprocessor for generating an output related to the size of the document, and an input/output controller coupled to said subprocessors; and
configuring said image processor means in a pipelined assembly by means of said input/output controller so that each image processor means performs one of the functions associated with said subprocessors.

Further advantageous embodiments are defined in the dependent claims.

According to the preferred embodiment of the invention, an image processing apparatus may be created within a single application specific integrated circuit (ASIC) chip having a series of pipeline image subprocessors therein which perform the functions of pixel normalization, background suppression, spot removal, void removal, scaling, and document height detection.

The image processing system can be programmably configured to perform any of the aforementioned functions, and the subprocessors of this processing system may receive downloaded program data in order to receive parameters associated with each of these preprocessors.

Each of the image processors may be arranged in a pipelined manner with each processor configured to perform a different processing function on a channel of image data. The processed images from each of these image processors may then be used by a plurality of work stations in order to electronically enter the dollar amount of each of the documents, upon the acquired processed image, thereby eliminating the need to physically handle each of the actual documents.

## BRIEF DESCRIPTION OF THE DRAWINGS

For a more complete understanding of the present invention, relative to the advantages thereof, reference may be made to the following detailed description taken in conjunction with the accompanying drawings in which:

FIG. 1 is a block diagram of a typical financial document sorting system containing image processing apparatus made in accordance with the teachings of this invention;

FIG. 2 is a block diagram of the image processing apparatus of the preferred embodiment of this invention;

FIG. 3 is a block diagram of the storage RAM and window shift register shown generally in FIG. 2;

FIG. 4 is a block diagram of the input/output controller shown generally in FIG. 2;

FIG. 5 is a block diagram of the normalization preprocessor block shown generally in FIG. 2;

FIG. 6 is a flowchart detailing the steps associated with the background suppression preprocessor block unit shown generally in FIG. 2;

FIG. 7 is a diagram showing the contents of the window which is shown generally in FIG. 2;

FIG. 8 is a block diagram of the background suppression preprocessor block shown generally in FIG. 2;

FIG. 9 is a block diagram of the histogram counter control shown generally in FIG. 8;

FIG. 10 is a flowchart detailing the computation of a new gradient and threshold which is shown generally in FIG. 6;

FIG. 11 is a block diagram of the edge detector assembly shown generally in FIG. 8;

FIG. 12 is a block diagram of the thresholding enabler shown generally in FIG. 8;

FIG. 13 is a block diagram of the threshold selector shown generally in FIG. 8;

FIG. 14 is a block diagram of the remapper shown generally in FIG. 8;

FIG. 15 is a block diagram of the background gray-level updater shown generally in FIG. 8;

FIG. 16 is a block diagram of the scaling preprocessor block shown generally in FIG. 2;

FIG. 17 is a flowchart detailing the steps associated within the scaling processor shown generally in FIG. 16;

FIG. 18 is a block diagram of the document height detection preprocessor block shown generally in FIG. 2;

FIG. 19 is a block diagram of the spot/void preprocessor block shown generally in FIG. 2; and

FIG. 20 is an illustration of the image processors of this invention arranged in a pipelined manner.

## DETAILED DESCRIPTION

### 1. Document System Overview

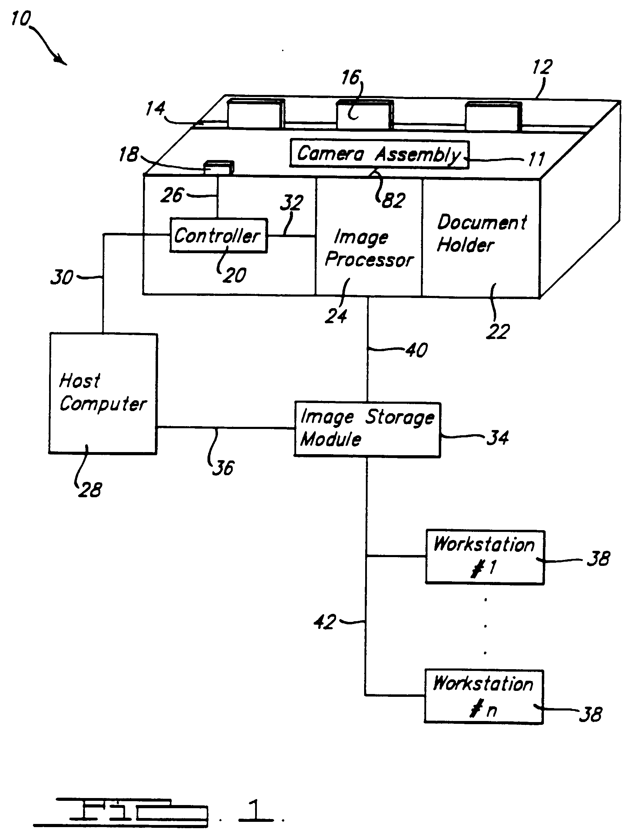

Referring now to FIG. 1, there is shown a financial document sorting system 10 having a typical document sorter **12** which, in the preferred embodiment of this invention, is a model DP1800 sorter which is manufactured by the Unisys Corporation of Blue Bell, Pennsylvania.

Sorter **12** contains a track **14** into which a plurality of financial documents **16** traverse through and reside within, and further contains a typical magnetic character reader **18** and a typical magnetic character reader controller **20**. Additionally, sorter **12** contains a document holder **22**, a camera assembly **11**, and the image processor **24** made in accordance with the teachings of the preferred embodiment of this invention.

Controller **20** is coupled to the reader **18** by signals on the bus **26**, to a host computer **28** by signals on the bus **30**, and to the image processor **24** by signals on the bus **82**. The computer **28** is coupled to an image storage module **34** by signals on the bus **36** and the image storage module **34** is also coupled to the image processor **24** and to a plurality of workstations **38** by signals on the busses **40** and **42** respectively. Additionally, camera system **11** is coupled to the image processor **24** by signals on bus **32**.

In operation, documents **16** sequentially traverse in close proximity to reader **18** which reads a typical magnetic code appearing each of the documents **16**. This code is then sent to the computer **28**, by signals on the bus **30**, for storage therein and to the image processor **24**, by signals on the bus **32**. As each of the documents **16** further travels within the track **14**, they pass in close proximity to the camera system **11** which captures the image of the document **16** and outputs a digital representation of the image on bus **82** to the image processor **24**. This digital representation comprises a plurality of image pixels having an intensity represented by a number between 0 and 255. Image processor **24** then processes this digitized image thereof and sends this processed image, by signals on the bus **40**, to the image storage module **34** for storage therein. After passing by the image processor **24**, each of the documents are then sorted, by sorter **10**, in the usual way and are held within the document holder **22**.

After a typical block of the documents **16** have been sorted in the aforementioned manner, the workstations **38**, by signals on the bus **42** sequentially request the aforementioned document images from the storage module **34**. These images are then downloaded to the workstations **38**, by use of signals on the bus **42**, along with their associated magnetic code data obtained from host computer **28**.

After these images are captured by the workstations **38**, individual operators electronically enter the dollar amount associated with each document and electronically resolve any difficulties associated with the reading of the magnetic code thereon by entering and storing the needed corrections for each document image. Each digitized image and its dollar amount and associated corrections then form a single computerized record which is then sent to the storage module **34**, by use of signals on the bus **42**, where it may be later accessed for use in automatically placing the dollar amount and corrections upon the sorted documents **16**. Therefore, the aforementioned document sorting system **10** substantially eliminates the physical handling of the plurality of documents **16** when the associated dollar amount is placed thereon thereby increasing the efficiency and timeliness of the overall document sorting system **10**.

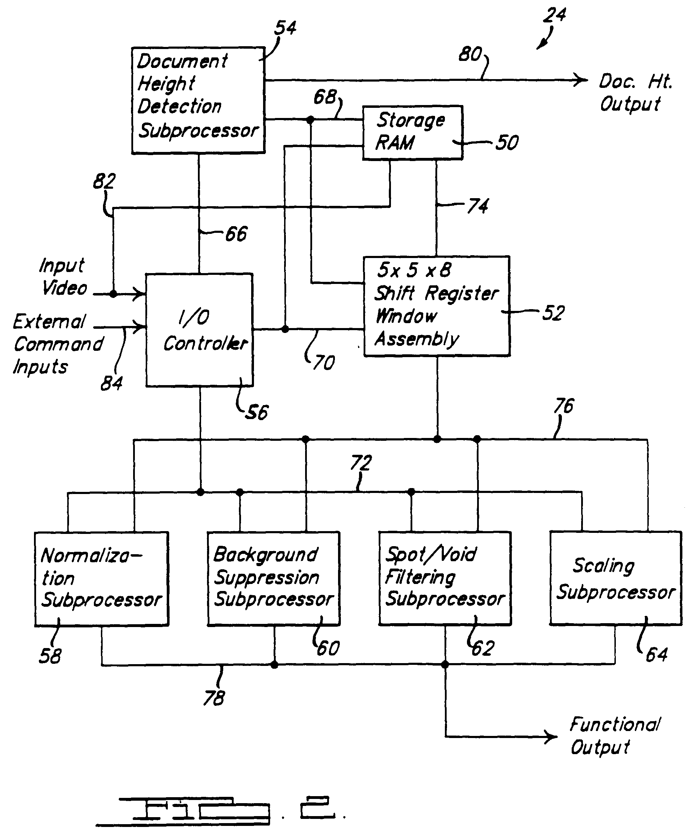

Referring now to FIG. 2, there is shown image processor **24** arranged in accordance with the principles of the preferred embodiment of this invention, and including a random access storage memory (RAM) **50**, a 5x5x8 bit shift register window assembly **52**, a document height detection subprocessor **54**, an input/output controller, a normalization subprocessor **58**, a background suppression subprocessor **60**, a spot/void subprocessor **62**, and a scaling subprocessor **64**.

Specifically, the document height detection subprocessor **54** is coupled to the input/output controller **56** by signals on bus **66** and is further coupled to the storage RAM **50** and to window shift register window assembly by signals on bus **68**. The input/output controller is coupled to the storage RAM **50** and to the shift window assembly **52** by signals on bus **70** while also being coupled to the subprocessors **58, 60, 62,** and **64** by signals on bus **72**.

The shift register window assembly is additionally coupled to storage RAM **50** by signals on bus **74** and is coupled to each of the subprocessors **58, 60, 62,** and **64** by signals on bus **76**. Additionally, the subprocessors **58, 60, 62,** and **64** are coupled together by signals on bus **78** which represent a functional output associated therewith, while the document height detection subprocessor **54** produces a document height output on bus **80**.

Input video data is coupled to the storage RAM **50** and to the input/output controller by signals on bus **82** while the input/output controller further has an input bus **84** which is coupled thereto and which contains externally placed parameter data and command inputs which may emanate from host computer **28** through busses **30** and **32** (FIG. 1).

Generally, the normalization subprocessor **58** is used to correct image data defects associated with such things as a non-uniform photo-cell responsiveness of the camera system **11** or non-uniform document illumination across a segment of a document being scanned during the acquisition of input video data which is placed upon bus **82** by system **11**.

The background suppression subprocessor **60** is used to eliminate unwanted scenic or patterned background information from the image of a scanned document, while retaining printed and written information with the image associated with signals on the bus **82**. The background suppression subprocessor **60** provides for uniform background, increased image contrast, and increased image uniformity associated with the video data placed upon bus **82**. The spot/void filtering subprocessor **62** is used to eliminate small white and dark anomalies which adversely affect the quality and compressibility of the image represented by signals on the bus **82**, while the scaling subprocessor **64** allows the image to be scaled relative to the resolution of the image by using one of a plurality of algorithms. The document height detection preprocessor **64** finds the highest and lowest points of transition from the image of the document to the image of the background thusly finding or identifying the overall height of the document whose image is represented by signals on bus **82**.

The input/output controller is used to receive externally placed commands and parameter data associated with the processing of the preprocessors **58, 60, 62,** and **64** and is further used in the normalization function to allow a remotely located controller (i.e. host computer **28**) to sample the input video signals upon the bus **82**. The input/output controller, by means of signals on bus **72**, selects one of the subprocessors **58, 60, 62,** or **64** to be activated in response to external command inputs upon bus **84**.

The shift register window assembly **52** is used as a repository for image pixel data and is used in the performance of the various functions associated with subprocessors **58, 60, 62,** or **64**. In the preferred embodiment of this invention, shift register window assembly **52** has a dimension of 5x5x8 bits, since each of the pixels associated with the video image upon the bus **82** is up to eight bits in length, and since the operations associated with the subprocessors **58, 60,** **62,** and **64** are performed upon a 5x5 pixel array.

## 2. Storage RAM and Pixel Window Assembly

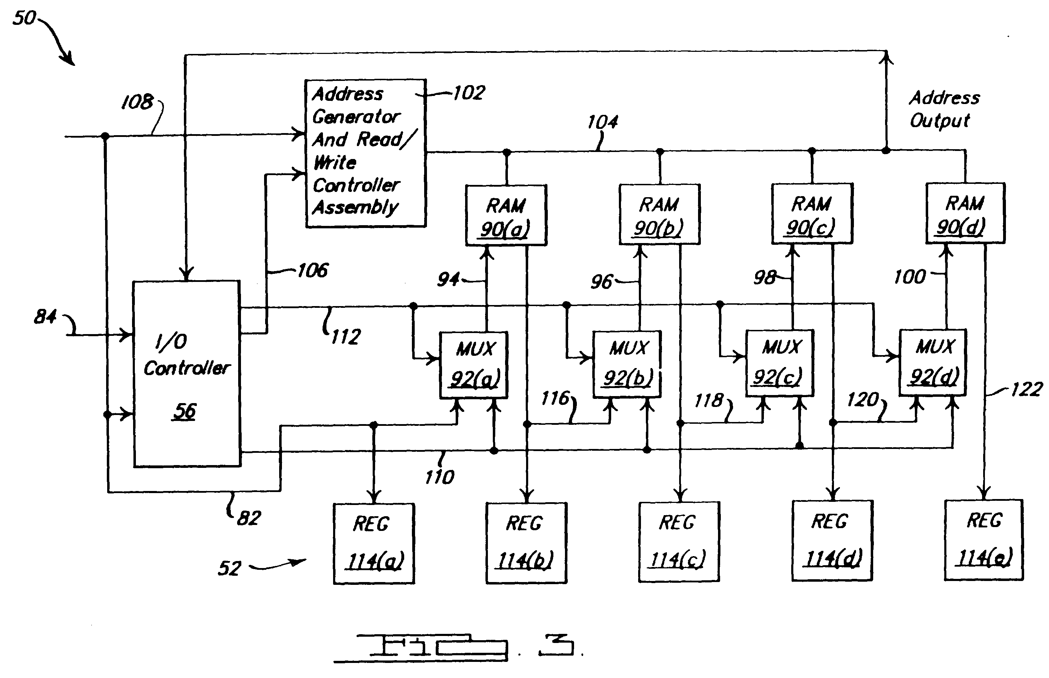

Referring now to FIG. 3 there is shown further details of the storage RAM 50 and the shift register window assembly 52 of FIG. 2. Specifically, the storage RAM 50 contains a plurality of random access memory units 90 (a-d), each of which contain a storage capacity of approximately one column of image data, each column having 532 addressable storage locations therein. Each of the column storage locations is capable of storing eight bits of data therein.

Each of the random access memory units 90(a-d) is coupled to an associated multiplexer 92(a-d) by signals on buses 94, 96, 98, and 100, respectively. Additionally, the storage RAM 50 contains an address generator and read/write controller assembly 102 which is coupled to random access memory units 90(a-d) by signals on bus 104 and to the input/output controller by signals on bus 106. Controller 56 places typical write enabling signals on bus 106 to controller 102. Address generator and read/write controller assembly is coupled to an end-of-scan input signal 108 from camera system 11 by signals on bus 82 and its use will hereinlater be explained.

Further, each of the multiplexers 92(a-d) is coupled to input/output controller 56 by signals on bus 110, which provides a multiplexer enablement or selection signal, and each of the multiplexers 90(a-d) are further coupled at another input associated therewith to the input/output controller 56 by signals on bus 112.

Shift window register assembly 52 contains a plurality of registers 114(a-e). Specifically, register 114(a) is coupled to the video input represented by signals on bus 82, and the register 114(b) is coupled to memory 90(a) and to multiplexer 92(b) by signals on bus 116. Register 114(c) is coupled to memory 92(b) and to multiplexer 92(c) by signals on bus 118, while the register 114(d) is coupled to memory 90(c) and to multiplexer 92(d) by signals on bus 120. Register 114(e) is coupled to memory 90(d) by signals on bus 122. Video data, present on bus 82, is also coupled to an input of multiplexer 92(a).

In operation, video data on bus 82 is initially input into multiplexer 92(a) (along with image processing data, on bus 110, which were originally input to the input/output controller by signals on the bus 84 of FIG. 2). Multiplexer 92(a) is then directed by the input/output controller 56, by means of signals on bus 112, to output either the video data that is present upon the bus 82 or the image processing data appearing upon the bus 110 to the memory 90(a) by signals on bus 94. The data represented by the signals on bus 94 is then input into memory 90(a) and is subsequently output therefrom to register 114(b) and to the multiplexer 92(b) by signals on bus 116. Additionally, the video data associated with bus 82 is initially input into the register 114(a) thereby.

The input/output controller 56 then sends additional image processing data to multiplexer 92(b) by signals on bus 110 and directs multiplexer 92(b) to output either signals on bus 116 or signals on bus 110 to memory 90 (b) by use of control signals on bus 112. This output data from the multiplexer 92(b) is then output upon bus 96. The data stored within the memory 90(b) is then output to register 114(c) by signals on bus 118 and is further input into the multiplexer 92(c). The input/output controller 56 also sends control inputs to the multiplexer 92 (c) by signals on bus 110 and, as before, directs the multiplexer 92(c), by signals on bus 112, to output either signals on bus 110 or signals on bus 118 therefrom and which ultimately appear on the bus 98.

Signal data upon bus 98 is input into memory 90(c) where it is subsequently output to register 114(d) by signals on bus 120 and to multiplexer 92(d) upon the same bus 120. The input/output controller 56 then transmits additional control data to multiplexer 92(d) by signals on bus 112 and this control data will cause multiplexer 92 (d) to output either signals on bus 120 or signals on bus 110 to the memory 90(d). The output data associated with the multiplexer 92(d) is placed upon bus 100.

Subsequently, memory 90(d) outputs the received data upon bus 122 to register 114(e). Thus, in the aforementioned manner, either the video input data originally received upon bus 82 or image processing data which appears upon bus 110 is serially shifted through the memory units 90(a-d) and is subsequently stored within the window shift register window assembly (FIG. 2), which is comprised of elements 114(a-e) of FIG. 3. This shifting is done into window shift register window assembly in order to allow the video or control data on busses 84 and 82 respectively to be accessed and used by subprocessors 58, 60, 62, and 64.

The address generator and read/write controller assembly 102 is used, in the aforementioned operation, to allow data to be written to memories 90(a-d) by sending a typical enabling signal on bus 104 thereto. Also, controller address generator and read/write controller assembly allows data to be written therefrom in response to a signal on bus 106.

Address generator and read/write controller assembly 102 further defines which addresses, of memories 90(a-d), the received data will be placed within by the use of usual counter mechanisms. This address definition is also sent to memories 90(a-e) by bus 104. The end of scan input signal 108, on bus 82, causes the address generator and read/write controller assembly 102 to note a complete line of scanned data has been received and, in one embodiment, is used by assembly 102 to resynchronize and reset its address counters in order to begin generating addresses for the next line of image data pixels associated with image signals on bus 82.

### 3. Input/Output Controller

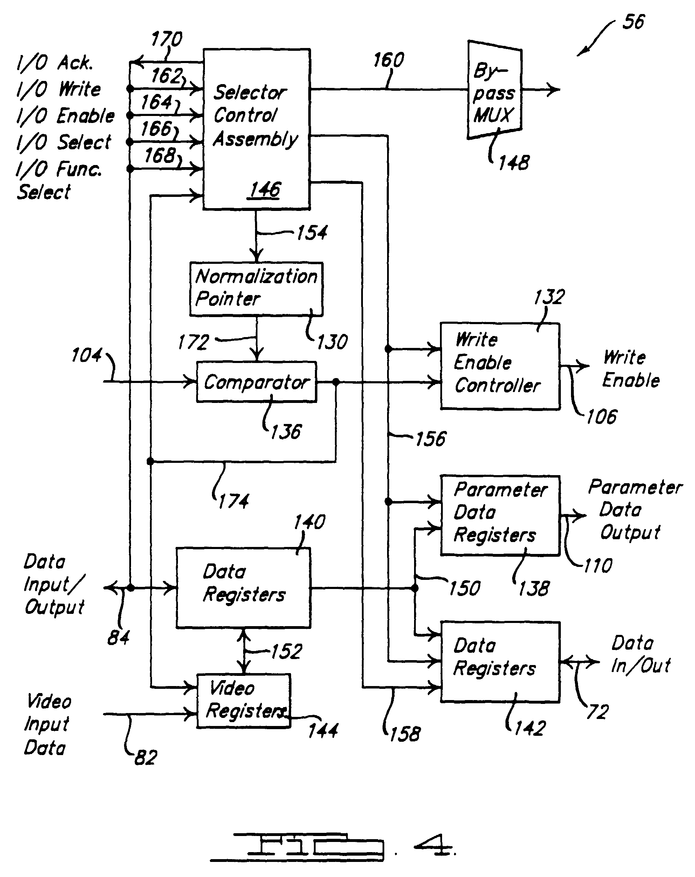

Referring now to FIG. 4 there is shown further details of the input/output controller **56** of FIG. 2 as containing a normalization pointer **130** used for reading data from or writing data to specific locations within storage RAM **50**, a write enable controller **132**, a comparator **136**, parameter data registers **138**, data registers **140** and **142**, video registers **144**, selector control assembly **146**, and bypass multiplexer **148**.

Specifically, the data registers **140** are coupled to the parameter data registers **138** and to the data registers **142** by signals on bus **150** while receiving input/output data from a previously mentioned external control apparatus by signals on bus **84**. Data registers **140** are also coupled to video registers **144** by signals on bus **152**, while video registers **144** are coupled to the input video data represented by signals on bus **82**.

The selector control assembly **146** is coupled to the normalization pointer **130** by signals on bus **154** and is further coupled to the parameter data registers **138**, to the write enable controller **132**, and to data registers **142** by signals on bus **156**, while additionally being coupled to data registers **142** by signals on bus **158**. Additionally, selector control assembly **146** generates a bypass enable signal upon bus **160** which is subsequently sent to the bypass multiplexer **148** which allows data to be sent through image processor **24** without being acted upon by any of the preprocessors **58, 60, 62,** or **64** of FIG. 2. (The use of bypass multiplexer **148** will be explained in a later section of this description.)

Additionally, the selector control assembly **146** is coupled to signals on bus **84** which comprises input/output write signal **162**, input/output enablement signal **164**, input/output select signal **166**, function select signal **168**, and input/output acknowledge signal **170**. Additionally, comparator **136** is coupled to signals on bus **104** (FIG. 3) which carry address information from the controller assembly **102** and is coupled to the pointer **130** by bus **172**, and is further coupled to assembly **146**, registers **144**, and to controller **132** by bus **174**.

In operation, the video data represented by signals on bus **82** is input into the registers **144** and is stored temporarily therein, and parameter data associated with the normalization preprocessor **58** (FIG. 2) is input to data registers **140** by signals on bus **84**. The output of data registers **140** is coupled by bus **150** to the parameter data registers **138** and represents parameters associated with the normalization preprocessor block **58** of FIG. 2. The parameter data registers **138** then place these parameters upon bus **110**, as mentioned earlier. The parameters associated with signals on bus **110** are output to the individual memories **90(a-d)** (FIG. 2) (by means of bus enabling signals **112** to multiplexers **92(a-d)** but are not written thereto until a signal on bus **104**, generated by the write enable controller **132**, is transmitted to the memories **90(a-d)**. This will occur only if controller **56** issues a signal on bus **106** to assembly **102**. That is, the write enable controller **132** must receive a signal upon buses **156** and **174** which will enable the controller **132** to transmit the appropriate write enabling signal on the bus **106**.

The signal on bus **174** indicates that an address output, which is placed upon bus **104** from the address generator and read/write controller assembly **102** (FIG. 3), is equal to the contents of pointer **130**. The signal on bus **156** indicates that the normalization function has been selected by a signal **168** and that one of the registers associated with the plurality of parameter data registers **138** has been selected by a signal **166**. If all these conditions are true, then the signal on bus **106** emanates from write enable controller **132** to the assembly **102**, which directs the assembly **102** to allow, by signals on bus **104**, parameter data register outputs on bus **110** to be placed in memories **90(a-d)** in the manner previously described.

The contents of video registers **144** are input into data registers **140** by bus **152** and are latched into registers **140** only when signal on bus **174** is activated by comparator **136**. This video data may be output via bus **84** for viewing by users of the image processor **24**. Output signals on bus **72** also contains the select signal **168** on bus **158** which is used to select one the preprocessor blocks **58, 60, 62,** or **64** of FIG. 2 and also transmits signals on bus **112** to multiplexers **92(a-d)** in response to signals **166** and **168**.

Specifically, as to the input signals **162, 164, 166, 168,** and **170** of bus **84**, the signal **166** directs the data on bus **84** to a specific entity **50, 52, 54, 58, 60, 62,** and **64** (FIG. 2) within image processor **24** while signal **162** determines the direction of data (i.e. input or output) relative to the input/output controller. Signal **164** enables assembly **146** to begin an input/output operation, and signal **170** is sent by assembly **146** to acknowledge receipt of data upon bus **84**.

The assembly **146**, in one embodiment, comprises a sequential state machine which is enabled by the activation of signal **164**. Next assembly **146** examines the state of signals **168, 166** and **162** to determine which preprocessor **54-64**, which register in the selected preprocessor **54-64**, and which direction the data is directed respectively. The selection and direction are made over bus **156** and bus **158** to register **142**. After selection, the data is input or output from bus **84** by means of data registers **140**. Completion of the cycle is indicated by the activation of signal **170**. If the normalization function is selected by signals **168** then the acknowledgment is held off until comparator **136** has indicated an address match on bus **174**.

The controller **132**, in one embodiment, also comprises a sequential state machine which is enabled by a signal on bus **174** and then examines signals on bus input/output controller and then places a unique output which directs assembly **102**, by signals on bus **106**, to continuously perform read/write cycles. If the normalization preprocess is selected, by signal **168,** assembly **102** is directed to only read or write at the address set by pointer **130**.

#### 4. <u>Normalization</u>

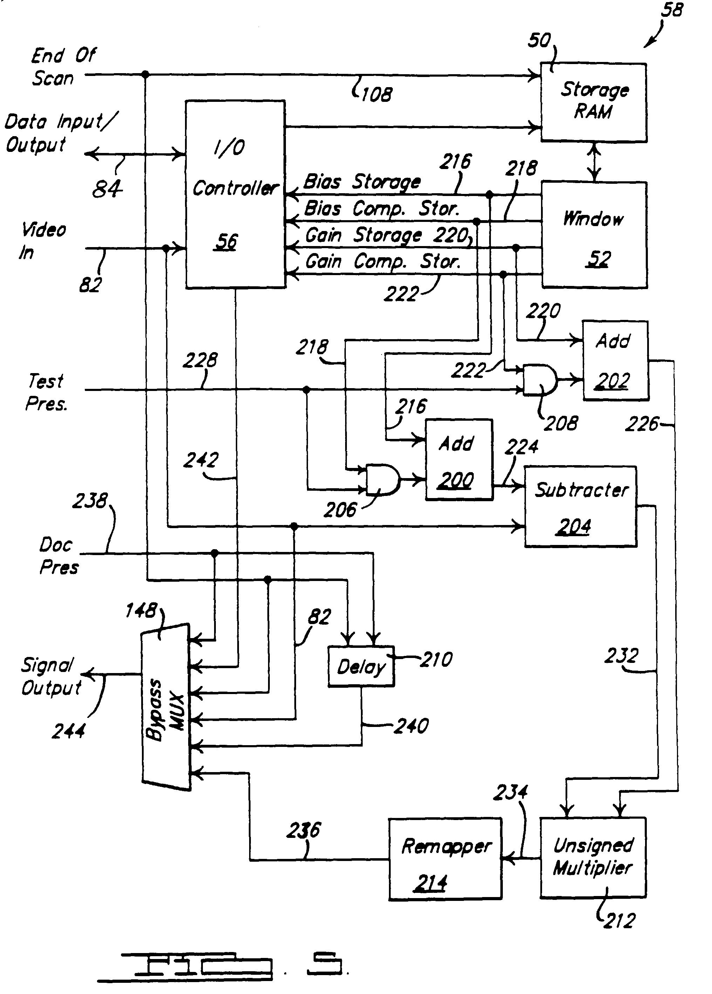

The purpose of the normalization preprocessor is to correct image defects associated with camera system **11**. Referring now to FIG. 5 there is shown a block diagram of further details of normalization preprocessor block **58** of FIG. 2, including adders **200** and **202**, subtractors **204**, AND gates **206** and **208**, delay unit **210**, unsigned multiplier **212**, and remapper **214**. Also shown is bypass multiplexer **148** which is used to pass data through image processor **24** without traversing the normalization preprocessor block **58**.

Signals on lines **216, 218, 220,** and **222** are used in conjunction with the logic entities **200, 202, 204, 206, 208, 210, 212,** and **214** in order to achieve a test gain and a test bias which generates a repeatable pattern of data. Specifically, the gain compensation and the bias compensation values, present on busses **222** and **218** are calculated in a software routine by the user of the pipeline such that when the two signals on busses **218** and **222** are combined with signals on busses **216** and **220** the aforementioned known repeatable pattern emerges on busses **224** and **226**.

AND gate **206** is coupled to a signal on bus **228**, which represents a test mode enablement, and to a signal on bus **218**. AND gate **208** is also coupled to the signal on bus **228** and to the signal on bus **222**. The output of the AND gate **206** is input into the adder **200**, along with a signal on bus **216**. The adder **202** is coupled, at its inputs, to an output of AND gate **208** and to the signal on bus **220**. Adders **200** and **202** produce outputs on buses **224** and **226**, respectively, which are, in turn, coupled to subtractor **204** and to unsigned multiplier **212**, respectively. The output of subtractor **204** is coupled to an input of multiplier **212** of bus **232**.

The subtractor **204** has a first input thereof coupled to the video input signals on bus **82**. The output of adder **202** is coupled to the unsigned multiplier **212** which produces an output signal on bus **234** for transmission to remapper **214**. Remapper **214** then produces, in a manner to be described below, an output on bus **236** which is sent to bypass multiplexer **148**.

Additionally, a signal on bus **238** representing the presence of a document is also coupled to the delay assembly **210** which produces an output upon bus **240** for transmission to bypass multiplexer **148**. Further, the delay assembly **210** is coupled to an end-of-scan signal on bus **108** and the bypass multiplexer is additionally coupled to the video input signal on bus **82**. Bus **108** is as coupled to multiplexer **148**.

Finally, the input/output controller is coupled to bypass multiplexer **148** via bus **242** which carries an enablement signal to select which of the input signals to multiplexer **148** will be passed to the multiplexer output at bus **244** (either delayed output on bus **240** and output on bus **236** or non-delayed output on buses **238** and **82**, and **108**.

Specifically, the gain and bias (and associated compensation) tables required to perform the normalization function are input into input/output controller by bus **84**. The input/output controller routes this table data of four tables to the storage RAM **50** by bus **70** (FIG. 2). Each table is loaded in a separate storage RAM **90(a-d)** (FIG. 3).

Following loading of the tables, values of the tables are sequentially output to window shift register window assembly and this output is synchronized with the video data on bus **82**. The synchronization of the storage RAM **50** is effectuated by the end of scan signal on bus **108**. That is, a signal on bus **108** identifies the last pixel in a video scan and causes the generator address generator and read/write controller assembly to reset to a predetermined initial address.

The outputs of window shift register window assembly (i.e., bias storage signal **216**, bias compensation storage signal **218**, gain storage signal **220**, and gain compensation storage signal **222**) are output on bus **70** to control assembly input/output controller where they can be read by a user of image processor **24**.

Entities **200-214** were placed within preprocessor block **58** in order to allow testing of the block while providing for identical outputs. The testing methodology generally requires the use of gain and bias compensation signals which, when combined with the typical gain and bias signals, causes the test gain and test bias signals to be generated, which is predetermined to be the same for all of the preprocessor blocks **58**, regardless of what channel of data they were operating upon (i.e., in situations where multiple channels of data are processed, in parallel, by a plurality of blocks **58**). Because the gain and bias values will be different for each channel, the user must calculate the gain and bias compensation values by taking the difference between the test gain and bias values the user requires, and the actual gain and bias values.

In test mode operation, the signals on the bus **228** enables both the AND gates **206** and **208** and allows the value of signals on the bus **218** and signals on bus **222** to be respectively output therefrom. Thusly, the adder **200** adds signal on the bus **218** to the signal on bus **216** and produces this added signal onto bus **224**. The adder **202** then adds the signal on the bus **220** to the signal on the bus **222** and produces this output signal upon the bus **226**. The subtractor **204** then subtracts the signal on the bus **224** from each of the pixel values appearing upon signal on the bus **82** and produces an output to the unsigned multiplier **212**. The unsigned multiplier **212** then multiplies the outputs of adders **202** and subtractors **204** thereby producing an output signal on the bus **234** to the remapper **214** which converts the seven bit value of incoming data into six bit values of grayscale video and in one embodiment comprise truly a lookup table. The remapper is used in order to have the data represent the true actual accuracy associated therewith.

In normal operating mode, signals on bus **228** forces the outputs of gate **206** and **208** to zero allowing bias and gain values from busses **216** and **220** to pass unaltered through adders **200** and **202** respectively.

Multiplexer **148** allows a user of image processor **24** to bypass preprocessor block **58** as the need arises. In one embodiment, this entity **148** is provided in order to allow test data to pass through block **58** unaltered.

## 5. Background Suppression

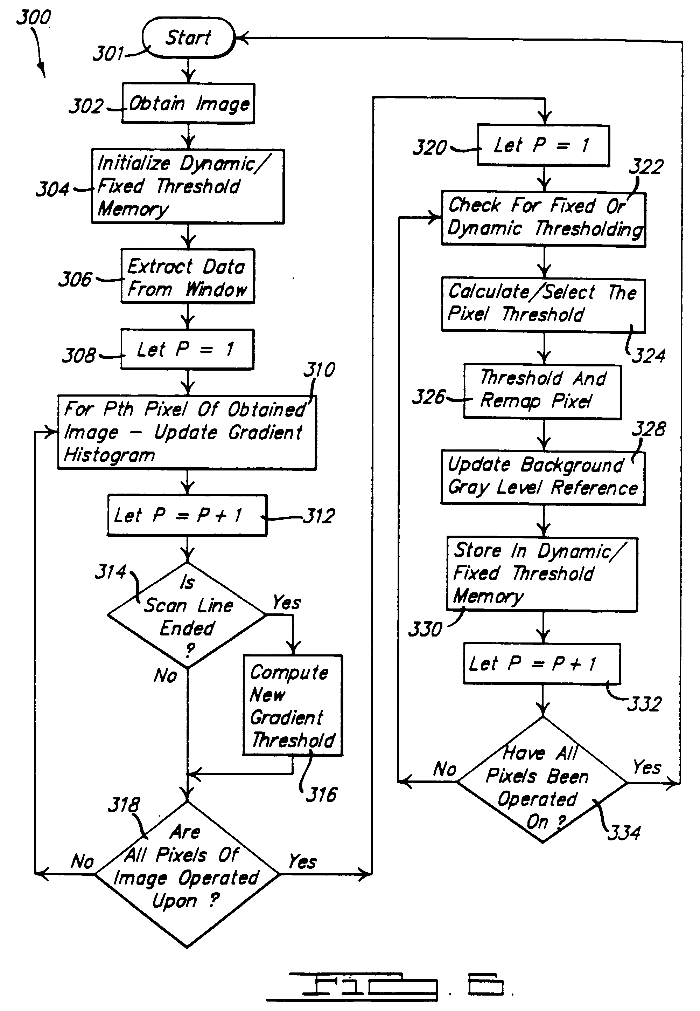

The purpose of background suppression is to eliminate unwanted scenic or patterned background information while retaining printed and written information. Referring now to FIG. 6 there is shown a flowchart **300** which represents the generalized process involved in the background suppression sequence associated with subprocessor **60** of FIG. 2. Many of these general operations associated with flowchart **300** have, in the preferred embodiment of this invention been implemented as a pipelined process in hardware in order to increase the speed associated with subprocessor **60**. Essentially, the background suppression function begins with an initial step **301** followed by the step **302** which requires the obtaining of a desired video image. This image is usually placed upon the bus **82** and is input into the shift register window assembly **52** in the manner previously specified. Next, step **304** requires the initialization of a dynamic/fixed threshold memory which is used to determine if the threshold will be dynamic or fixed for each of the individual pixels within the obtained image and is used to store a fixed threshold (which may be updated-- to be explained later) therein (i.e. a gray-scale background reference).

The next step **306** requires the extraction (from each of the image pixels within the window assembly **52**) of data (to be later explained). The next step **308**, is associated with the initialization of a variable "P" used for explanatory purposes only, while the next step, **310** requires the obtainment and updating of a gradient histogram for each of the pixels of the obtained image associated with the variable "P".

Step **312** requires the incrementation of the variable "P" which represents an index to each pixel in the acquired image and is followed by step **314** which requires image processor **24** to determine if a scan of the acquired image line has ended. If a scan line has indeed ended, then step **314** is followed by step **316** which requires the computation of a new gradient threshold associated with the portion of the acquired image which has been inspected. If a scan line has not been ended, then step **314** is followed by step **318** which requires a determination, if all the pixels of the image have operated upon. If all the pixels have been operated upon, then step **318** is followed by step **310**. If the determination in step **318** is that all the pixels of the image have been operated upon, then step **318** is followed by step **320** which reinitializes the previously defined variable "P". A gradient threshold, therefore, has been generated for each column or vertical scan line of the image at this point.

Step **320** is followed by step **322** which requires the checking for fixed or dynamic thresholding. Step **322** is followed by step **324** which requires calculation and selection of the pixel threshold. Step **324** is followed by step **326** which requires a thresholding and remapping of the pixel, and step **328** is followed by step **326** which requires the updating of the background gray-level reference associated therewith.

Step **330** follows step **328** and requires the storage in the dynamic/fixed threshold memory of the updated background gray-level reference, and step **332** follows step **330** which requires image processor **24** to update the previously defined variable "P". Step **334** follows step **332** and requires image processor **24** to determine if all of the pixels have been operated upon. If all the pixels have not been operated upon, then step **334** is followed by step **322**. However, if all the pixels of the obtained image have been operated upon, then the initial state **301** is re-entered.

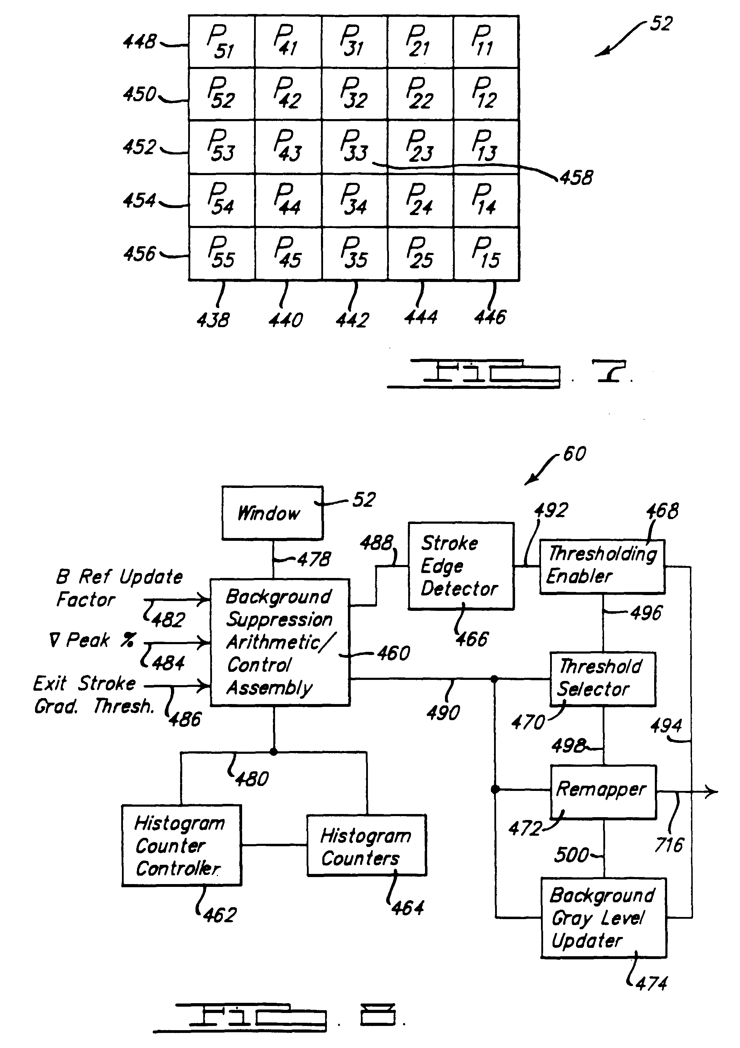

In order to fully understand the utilization of the following steps by the background suppression subprocessor **60** of FIG. 2, it is now necessary to turn to FIG. 7 which shows a typical pixel packing associated with the shift register window assembly **52** of FIGS. 2 and 3. That is, shift register window assembly **52** is seen to have columns **438, 440, 442, 444,** and **446** and rows **448, 450, 452, 454,** and **456**. Each intersection of a row **438, 440, 442, 444,** and **446** with an associated column **448, 450, 452, 454,** and **456** yields a unique pixel value **458** associated with the acquired image which was represented by signals on bus **82** (FIG. 2). For example, the pixels associated with column **442** are designated as "$P_{31}$", "$P_{32}$", "$P_{33}$", "$P_{34}$", and "$P_{35}$".

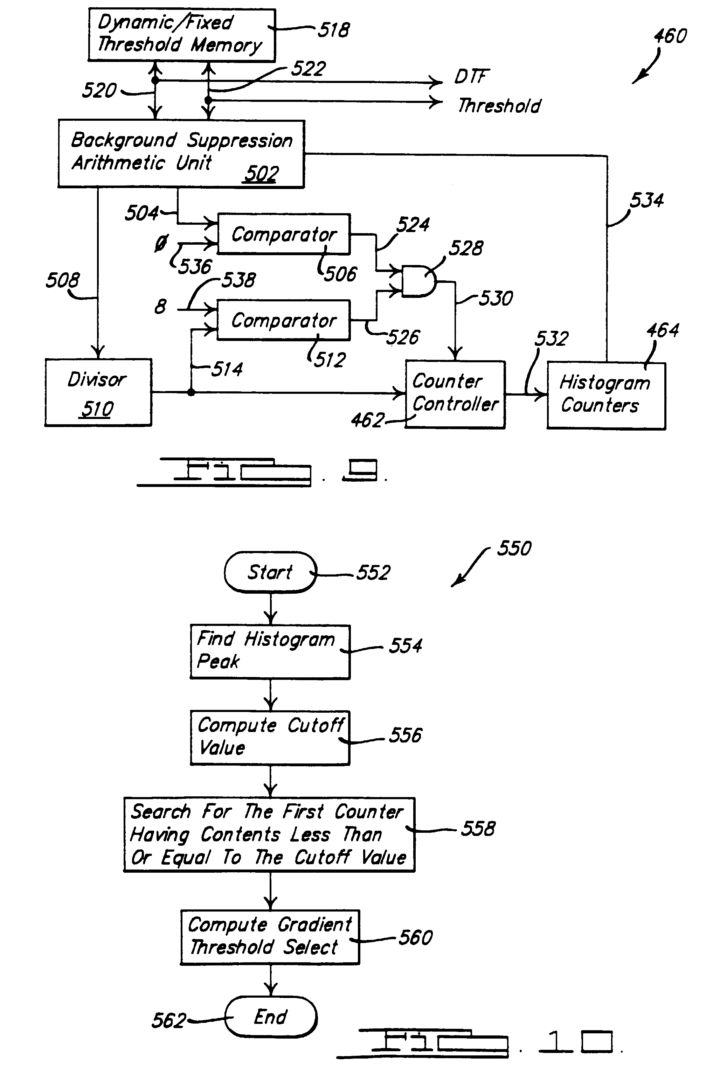

Turning now to FIG. 8, there is shown a more detailed block diagram of the background suppression subprocessor **60** of FIG. 2. Subprocessor **60** includes an arithmetic and control assembly **460**, a histogram counter controller **462**, a plurality of histogram counters **464**, a stroke edge detector **466**, a thresholding enabler **468**, a threshold selector **470**, a remapper **472**, and a background gray-level updater **474**.

The background suppression arithmetic/control assembly **460** is coupled to shift register window assembly **52** by signals on bus **478** and is coupled to the histogram counter controller **462** and to the plurality of histogram counters **464** by bus **480**. Control assembly **460** additionally is coupled to signals **482, 484,** and **486** which respectively represent a background reference update factor, a change in peak percentage, and an exit stroke gradient threshold value (all of which will be herein explained). These signals initially appear on bus **84** and are programmably input from a user of image processor **24** of FIG. 2 to the controller **56**.

Additionally, the control assembly **460** is coupled to the stroke detector **466** by bus **488** and to the threshold selector **470,** the remapper **472,** and to the background gray-level reference updater **474** by bus **490**. Enabler **468** is coupled to the detector **466** by bus **492**, to updater **474** by bus **494**, and to the threshold selector **470** by bus **496**. The remapper **472** is coupled to the selector **470** by bus **498** and to the updater **474** by bus **500**.

In operation, the histogram counter controller **462** and histogram counters **464** are used to create a histogram of gradient magnitudes associated with the acquired image in order to dynamically process the image knowing frequently occurring gradient magnitudes that exist therein. The histogram is updated with each new pixel **458** in the shift register window assembly **52**, in practice. This tailoring of gradients, in a dynamic fashion, is seen to increase the usefulness of the background suppression operation. That is, the background patterns with fairly high contrast could interfere with a typical background suppression algorithm. The gradient histogram allows the image processor **24** to distinguish between infrequently occurring high contrast printing and more frequently occurring low contrast background patterns, and allows these more frequently occurring patterns to be suppressed.

The control assembly **460** is used to control the histogram counter controller **462** and counters **464,** the stroke edge detector **466**, the selector **470**, and the updater **474** while calculating a plurality of values associated with the imaging process. The dynamic/fixed threshold memory is contained, in this embodiment, in assembly **460** and is used to determine if a particular pixel **458** within the acquired image will have a dynamic or fixed thresholding associated therewith while the thresholding enabler **468** enables either the dynamic or the fixed thresholding.

The stroke edge detector **492** signals enabler **468**, by bus **492**, when a contrast change has occurred which is caused by the detection of the leading and trailing edges of printed or written strokes upon the image. The threshold selector **470** then computes the dynamic threshold, if it has been previously selected, or allows fixed thresholding to occur. The remapper **472** readjusts the gray-level associated with the threshold and pixel **458** in question, based on the threshold selector **470** and the updater **474** then updates the gray-level or fixed thresholding reference. As previously alluded to, it has been determined that the dynamic thresholding has yielded empirically better results than the results associated with the fixed thresholding due to the fact that the dynamic thresholding may be modified for different pixel values rather than having one single thresholding value to which all the pixels are represented against.

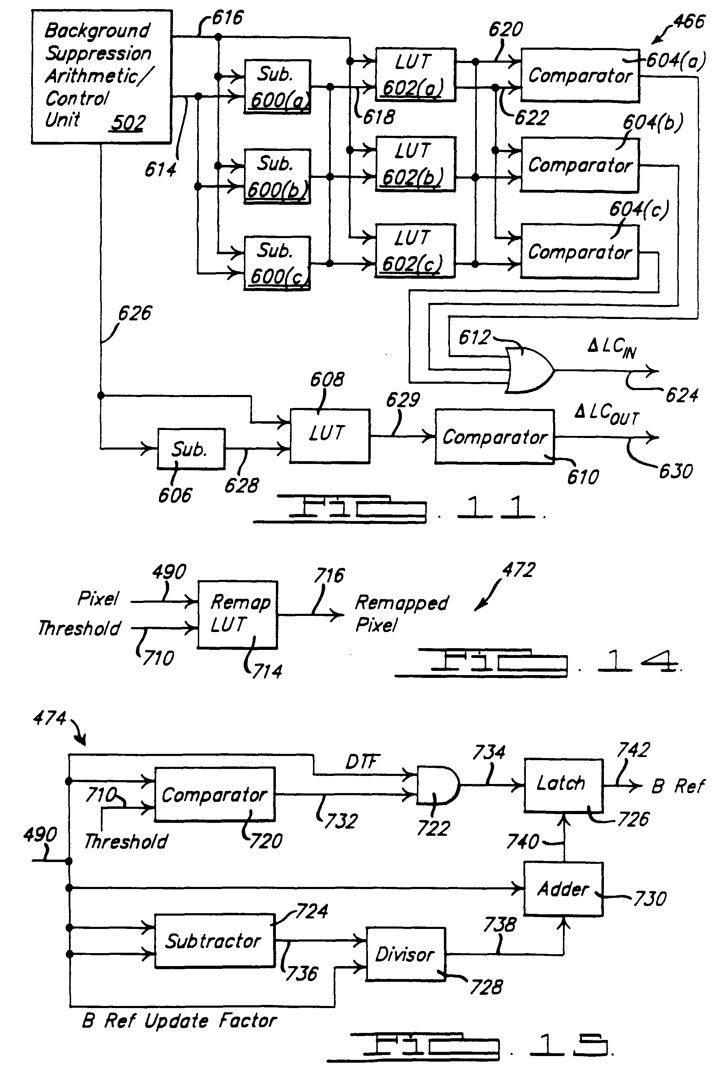

Referring now to FIG. 9, there is shown further details of the background suppression arithmetic control assembly **400** and controller and counters **462** and **464** respectively (FIG. 8). Assembly **400** is seen to contain a background suppression arithmetic unit **502** coupled by bus **504** to a comparator **506** and further coupled by the bus **508** to a divisor unit **510**. Additionally, the divisor unit **510** is coupled to a comparator **512** by bus **514** and is coupled to the counter controller **462** by the same bus **514**. The dynamic/fixed threshold memory **518** is coupled to unit **502** by busses **520** and **522**.

The dynamic/fixed threshold memory **518** contains two pieces of data for each pixel position in a channel of data **82** (FIG. 2). The two pieces of data are a dynamic threshold flag bit (signal on bus **520**) and a background gray level reference (signal on bus **522**).

The flag bit, on bus **520**, is "set" to indicate that at the pixel location in a scan, dynamic thresholding should be used to separate character strokes from background. The value of this background gray level reference is revaluated for every scan line of the channel (hereinafter explained). If the flag bit is cleared, then a fixed or background gray level reference threshold is used to separate strokes from background data.

The comparators **506** and **512** output signals on the buses **524** and **526** which are input into an AND gate **528**. The output of AND gate **528** is coupled by bus **530** to counter selector controller **462**. The counter selector **462** outputs signals on the bus **532** which are input into the histogram counters **464**. The histogram counters **464** place an output signal on bus **534** which is coupled to the background suppression arithmetic/control unit **502**.

In operation, the background suppression arithmetic unit **502** is used to generate a plurality of quantities associated with each of the pixels within the window shift register window assembly **52**. These values include a current horizontal gradient, a current vertical gradient, a current gradient magnitude, previous horizontal gradient, previous vertical gradient, previous gradient magnitude, and an average local gray value. All of these aforementioned values are associated with a single pixel **458** shown in FIG. 7.

The following computational examples are with reference to pixel "$P_{33}$" which is placed within column **442** and row **452** of window shift register window assembly **52**, as shown in FIG. 7. The current horizontal gradient for pixel "$P_{33}$" is defined to equal the gray-scale value associated with pixel "$P_{23}$" minus the current gray-scale value associated with pixel "$P_{43}$". The current vertical gradient associated with pixel "$P_{33}$" is defined to be the current gray-scale value associated with pixel "$P_{34}$" minus the current gray-scale value associated with pixel "$P_{32}$". The current gradient magnitude is defined to be the absolute value of the current horizontal gradient plus the absolute value of the current vertical gradient. The previous horizontal gradient associated with pixel "$P_{33}$" is defined to be the gray-scale value associated with pixel "$P_{13}$" minus the gray-scale value associated with pixel "$P_{33}$". The previous vertical gradient is defined to be the gray-scale value associated with pixel "$P_{24}$" minus the gray-scale value associated with pixel "$P_{22}$". The previous gradient magnitude is defined to be the absolute value of the previous horizontal gradient plus the absolute value of the previous vertical gradient. The average local gray value associated with pixel "$P_{33}$" is defined to be a summation of gray-scale values associated with pixels "$P_{22}$", "$P_{23}$", "$P_{24}$", "$P_{32}$", "$P_{33}$", "$P_{34}$", "$P_{42}$", "$P_{43}$", "$P_{44}$", plus two times the summation of the gray-scale values of pixels "$P_{11}$", "$P_{13}$", "$P_{15}$", "$P_{31}$", "$P_{35}$", "$P_{51}$", "$P_{53}$", "$P_{55}$". This summation is then divided by twenty-five to yield the aforementioned average local gray value.

After these quantities have been computed, the horizontal gradient is input to the comparator **506** of FIG. 9 by signals on the bus **504**. A value of zero is also input into the comparator **506** along the bus **536**. The comparator **506** then compares the value of zero which is defined by the bus **536** with the horizontal gradient placed upon the bus **504** and, if the value of the horizontal gradient, as previously defined, is greater than zero, then comparator **506** places a logical high value onto the bus **524**. Each pixel **458** has six bits of data associated therewith at this point, in one embodiment.

The comparator **512** has an input coupled to the bus **514** which is also coupled to the divisor **510**. The divisor **510** divides the current gradient magnitude, on bus **508**, by three and outputs the signal onto bus **514**. The comparator **512** also has an input coupled to the bus **538** which is defined to be eight and compares the value of eight to the value upon bus **514**. If the value of bus **514** is greater than eight, then the signal on the bus **526** is defined to be logically low. If the value upon bus **514** is less than eight, then the signal on bus **526** is defined to be logically high. The AND gate **528** then outputs a signal on the bus **530** which is logically high, if the horizontal gradient associated with the pixel in question is greater than zero, but having a current gradient magnitude being less than twenty-five. Should these conditions be satisfied, then the signal on the bus **530** is output from the AND gate **528** to the counter controller **462** and which enables the counter controller **462** such that one of the plurality of histogram counters **464** is activated.

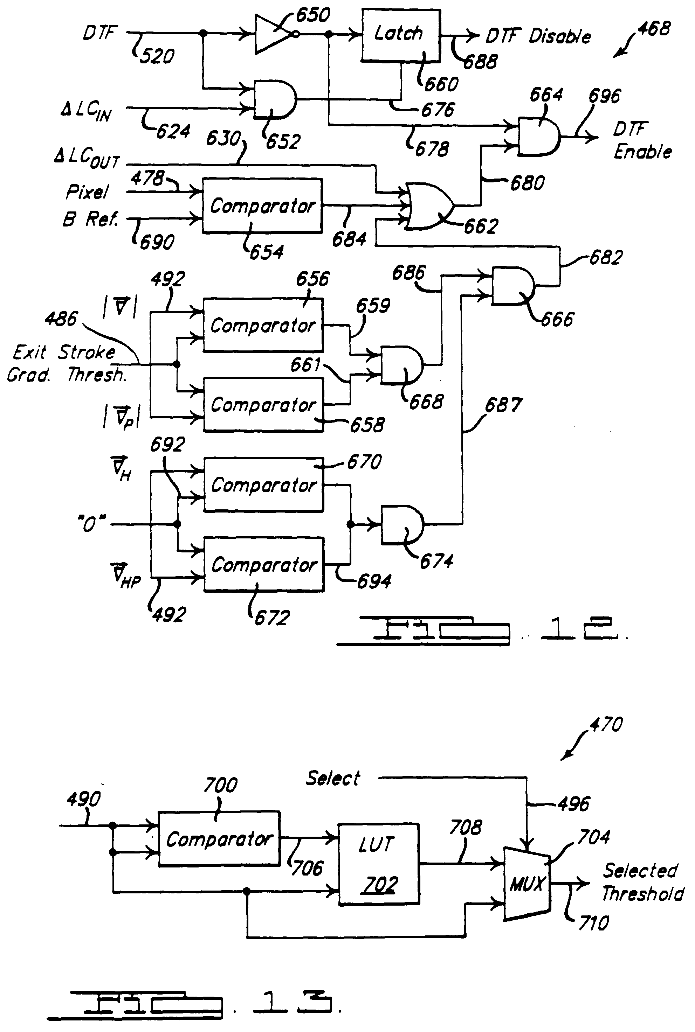

The counter that is activated is defined by the signal on bus **532**. That is, each of the counters within the plurality of histogram counters **464** is uniquely addressed by signals on bus **532**. Thus, a histogram of values associated with each of the pixels in the assigned image is built such that the most frequently occurring gradients that exist within an image may be defined. Each of the counters within the plurality of counters **464** are addressed by the output of divisor **510**. Therefore, the background suppression steps **301-314** of the flowchart of FIG. 6 have now generally been explained relative to the background suppression associated with subprocessor **60**. In order to detail the general computation of a new gradient threshold associated with step **316** of FIG. 6, it is necessary now to refer to FIG. 10.

Specifically, flowchart **550** of FIG. 10 begins with an initial step of **552** which is followed by step **554** which requires subprocessor **60** of FIG. 2 (i.e. entity **462** therein) to define a histogram peak. That is, controller **462** examines all of the counters within the plurality of histogram counters **464** to determine which one has the highest value. The counter within entity **464** with the highest value determines the peak. Step **556** follows step **554** and requires the subprocessor **60** to compute a cutoff value. This cutoff value is defined to be the value of the counter (within counters **464** having the highest value) multiplied by the signal **484** (FIG. 8) which may be programmed by the user of processor **24**.

Signal **484**, in the preferred embodiment of this invention represents a change in the gradient peak and in the preferred embodiment of this invention is typically 25%. This value was empirically derived and found to give adequate separations between background gradients represented by the peak of the histogram counters **464** and printed character stroke gradients represented by those gradients exceeding the cutoff value.

Next, step **558** follows step **556** and requires subprocessor **60** (i.e., controller **462**) to search for the first histogram counter having contents less than or equal to the new cutoff value. Step **560** then follows step **558** and requires subprocessor **60** to compute a gradient threshold select, which is substantially equal to the following:

(address of histogram counter having highest value x 3) + 1

Step **560** is then followed by step **562** which defines the end of flowchart **550**.

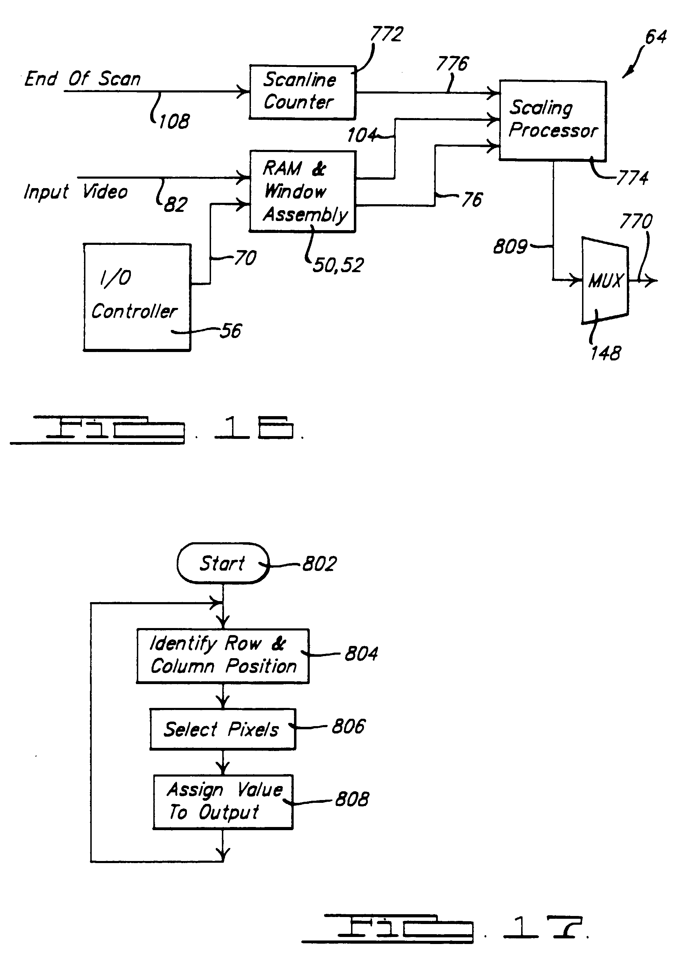

Referring now to FIG. 11 there is shown more detail of the stroke edge detector **466** of FIG. 8 as containing subtractors **600(a-c)**, lookup tables (LUT) **602(a-c)** (which may be externally placed relative to the ASIC), comparators **604(a-c)** (which may also be externally placed), subtractor **606**, lookup table **608**, comparator **610**, and OR gate **612**. Specifically, the background suppression arithmetic control unit **502** is coupled to subtractors **600(a-c)** by buses **614** and **616** while also being coupled to lookup tables **602(a-c)** by signals on the same bus **616**. Subtractors **600(a-c)** are coupled to the lookup tables **602(a-c)** by bus **618**, while lookup tables **602(a-c)** are coupled to comparators **604(a-c)** by buses **620** and **622**.

In operation, the stroke edge detector **466** is used to determine the change in local contrast associated with every pixel **458** within the acquired image on bus **82**. The change in local contrast is computed both in terms of coming into a handwritten or printed stroke and exiting a handwritten or printed stroke within the same pixel. The operation of the stroke edge detector **466** will now be explained in terms of a single pixel, that of pixel "$P_{33}$" of FIG. 7, but it should be apparent to one of ordinary skill in art that each of the pixels associated with window shift register window assembly, and illustrated in FIG. 6, may be processed in a substantially similar manner.

Unit **502** (see FIG. 9) obtains the gray-scale values associated with pixels "$P_{23}$", "$P_{13}$", and "$P_{33}$" from the window configuration shift register window assembly by signals on bus **478** (FIG. 8). These gray-scale values are then placed upon bus **614** and input into subtractors **600(a-c)**. Subtractor **600(a)** subtracts the gray-scale value of pixel "$P_{33}$" from that of pixel "$P_{23}$" and outputs the difference on bus **618** to lookup table **602(a)**. Subtractor **600(b)** subtracts the gray-scale value of pixel "$P_{33}$" from that of pixel "$P_{13}$" and outputs the subtracted value on bus **618** to lookup table **602(b)**. Subtractor **600 (c)** subtracts pixel "$P_{33}$" from the background reference threshold, which has been fixed and stored within the unit **502**, and outputs the subtracted value to the lookup table **602(c)** by bus **618**.

Additionally, unit **502**, by signals on bus **616**, outputs the gray-scale value of pixel "$P_{23}$" to lookup table **602(a)**, the gray-scale value of pixel "$P_{13}$" to lookup table **602(b)**, and the background gray-scale reference value to lookup table **602(c)**.

Signals on bus **618** are then used as addresses to access a local contrast value which has already been stored and which is assigned to a given change in pixel level value. Upon receipt of signals on bus **616**, tables **602(a-c)** output this change in local contrast to comparators **604(a-c)** by signals on bus **620**. Additionally, comparators **604(a-c)** also are coupled by bus **622** to lookup tables **602(a-c)**, and tables **602(a-c)** output thereto a stored (empirically formulated) contrast threshold which may be modified by a user of image processor **24** which, in the preferred embodiment of this invention, is **35**.

Comparators **604(a-c)** then compare the change in local contrast which is calculated by lookup tables **602 (a-c)** with the contrast threshold (i.e., **35**) and determine if the changes in local contrast associated with these lookup tables **602(a-c)** is greater than this threshold. If any of these changes in local contrast are indeed greater than the threshold, then OR gate **612** outputs a logical one onto bus **624.**

The subtractor **606** is used in cooperation with lookup table **608** and comparator **610** to determine the change in local contrast associated with exiting from a stroke within the image in question. Specifically, assembly **502** inputs the gray-scale value associated with pixels "$P_{33}$" and "$P_{13}$" to the subtractor **606** by bus **626**. Assembly **502** also inputs to lookup table **608** the background gray-scale reference value associated therewith along the same bus **626**. Subtractor **606** then subtracts the gray-scale value associated with the pixel "$P_{13}$" from the gray-scale associated with the pixel "$P_{33}$" and outputs the subtracted value to the table **608** by signals on bus **628**.

Lookup table **608** then calculates the change in local contrast based upon the background reference gray-scale associated with signals on the bus **626** and the subtracted signal on the bus **628** and inputs this, by bus **629**, to comparator **610**. This calculation is defined as:

$[(P_{33}-P_{13})/(\text{Background Reference gray-scale})] * 100$.

The comparator **610** then compares the output value associated with the change in local contrast for the exiting stroke associated with the active pixel **458** against an empirically derived threshold contained in table **608**. In the preferred embodiment of this invention it is **25**. If, indeed, this threshold has been exceeded, comparator **610** produces a logical one on bus **630** indicating change in local contrast in the exiting direction associated with the local pixel **458** from a printed or written document stroke.

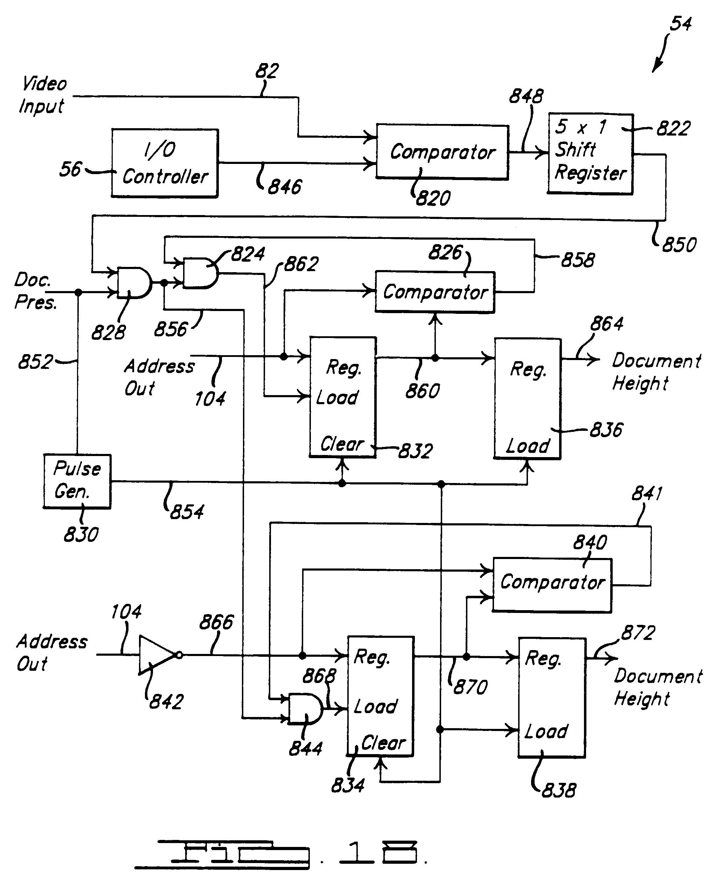

Referring now to FIG. 12, there is shown details of the threshold enabler **468** of FIG. 8 as containing a NOT gate **650**, an AND gate **652**, comparators **654, 656,** and **658**, a latch **660,** OR gate **662**, AND gates **664, 666,** and **668**, comparators **670** and **672,** and an AND gate **674.**

Specifically, AND gate **652** is coupled to the latch **660** by bus **676**, while the NOT gate **650** is coupled to the latch **660** and to a first input of AND gate **664** by bus **678**.

The output of OR gate **662** is coupled to a second input of AND gate **664** by bus **680.** A first input of OR gate **662**, is coupled to the output of AND gate **666** by signals on bus **682**. A second input of AND gate **662** is coupled to an output of comparator **654** by signals on bus **684**, and a third input of AND gate **662** is coupled to bus **630**. AND gate **666** has a first input coupled to an output of AND gate **668** via bus **686** and a second input coupled to an output of AND gate **674** by bus **688**. AND gate **652** has a first input coupled to bus **624** and a second input coupled to the dynamic thresholding signal on bus **520** which emanates from the dynamic threshold memory **518** of FIG. 9.

Comparator **654** has a first input coupled to the gray-scale value of the active pixel (i.e. pixel "$P_{33}$") obtained from the window shift register assembly **52** by bus **478** and a second input coupled to the background gray-scale reference signal **690** which is stored in the dynamic/fixed threshold memory **518** of FIG. 9 (and which will be explained later). Comparator **656** has a first input coupled to the current gradient magnitude via busses **488** and **492** from assembly **460** (FIG. 8) and a second input coupled to signal **682** which is a gradient threshold associated with an exit stroke of the active pixel (i.e., pixel "$P_{33}$") and which is empirically defined by the user of image processor **24** and in the preferred embodiment of this invention, this exit stroke gradient threshold comprises a value of seven out of a possible range of O to 127.

Comparators **658** and **656** have a first input coupled to the gradient threshold associated with the exit stroke (i.e., signal **486**) and comparators **658** and **656** have a second input coupled via busses **492** and **488** to the previous vertical gradient associated with the background suppression arithmetic control assembly **460** (FIG. 8) and the current vertical gradient (by busses **492** and **489**) respectively. The outputs of comparator **656** and **658** are respectively placed on bus **659** and **661** to gate **668**. Comparator **670** has a first input coupled by bus **492** and **488** to the current horizontal gradient and a second input coupled to bus **692** which carries a logically zero signal. The comparator **672** likewise has a first input coupled, to the logically zero signal on bus **692** and a second input coupled to the previous horizontal gradient on busses **492** and **488**. The outputs of comparators **670** and **672** are input to AND gate **674** by signals on bus **694**.

In operation, the dynamic threshold flag signal on bus **520** is inverted by gate **650**, and this inverted signal is then sent to the input of latch **660**. Additionally, the AND gate **652** will cause signal on bus **678**, from invertor **650**, to be latched by latch **660** when the conditions at the input of gate **652** produce a signal on the bus **676** which is logically high. Thus, the AND gate **652** cooperates with the latch **660** in producing a disabling signal, on bus **688**, for the dynamic threshold select whenever the dynamic threshold flag signal on bus **520** is logically high and entry into a printed stroke is docketed by signal on bus **624** going to a logically high state. In other words, dynamic thresholding is disabled if it has been previously enabled and a printed stroke, of the image, is being processed requiring no dynamic thresholding.

The signal on the bus **696** will comprise an enablement signal for the dynamic thresholding as long as any one of the signals on the buses **630, 684,** or **682** are logically high and the enablement flag signal on bus **520** is low. That is, since the AND gate **664** logically combines signals on the bus **678** and **680**, these signals must be both logically high in order for the signal on bus **696** to be the same. Therefore, the signal on the bus **520** must be logically low in order for the signal on the bus **678** be logically high. Additionally, in order for the signal on the bus **680** to be logically high, one of the signals on the buses **630, 684,** and **682** must be logically high due to the operation of the OR gate **662**.

The signal on the bus **630** will be logically high if the aforementioned output of the comparator **610** (FIG. 11) is logically high. The signal on the bus **684** will be logically high if the gray-scale value associated with the pixel in question (i.e. "$P_{33}$") is higher than the background gray-scale reference value associated with signal **690**. The signal on the bus **682** will be logically high if the signals on the buses **686** and **686** are both logically high. Therefore, in order for the signal on the bus **686** to be logically high, the output of both comparators **656** and **658** must be logically high at the same time. This will occur if the current gradient threshold associated with the pixel in question is greater than the exit stroke gradient threshold and if the previous gradient threshold is greater than the exit stroke gradient threshold as well.

Signals on the bus **688** will be logically high if the output of the comparators **670** and **672** are logically high. This will occur only if the horizontal gradient is negative and the previous horizontal gradient is negative as well. Should the signals on the buses **686,** and **688** all be logically high, then the signal on the bus **682** will be logically high and will cause the dynamic thresholding to be enabled via a logically high signal on the bus **696**.

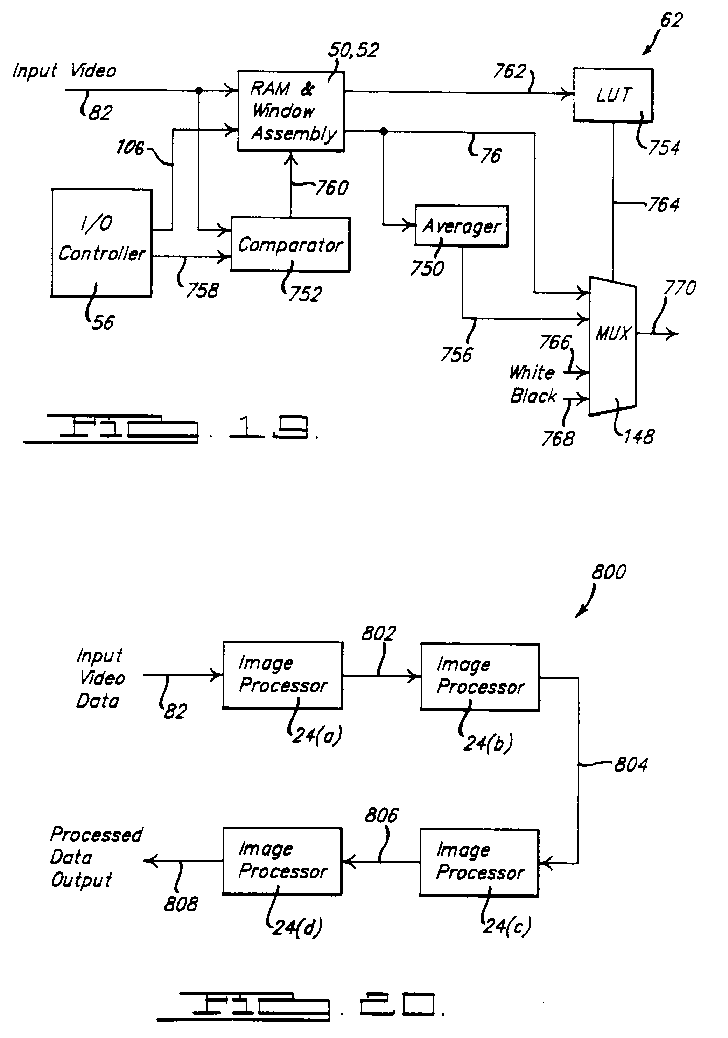

Referring now to FIG. 13, there is shown details of the threshold selector **470** of FIG. 8 as containing a comparator **700,** a lookup table **702**, and a multiplexer **704**. Specifically, the comparator **700** is coupled to signals on bus **490** (FIG. 8) which carry the current gradient magnitude and the calculated gradient threshold. Additionally, the lookup table **702** is also coupled to a signal on the bus **490** corresponding to the average local gray value associated with the pixel in questions.

The comparator **700** places its output signals on bus **706** to lookup table **702** which produces an output signal on bus **708** to the multiplexer **704**. Multiplexer **704** has its input coupled to the signals on the bus **490** and receives an input associated with the background gray-scale reference value signal **690**. The value of the dynamic threshold select signal carried by bus **490** is coupled to a select port of multiplexer **704**. Multiplexer **704** produces an output upon bus **710**.

In operation, comparator **700** compares the values of the current gradient magnitude to the computed threshold gradient, and if the current gradient magnitude is greater than or equal to the computed threshold gradient, comparator **700**, produces a logical one onto bus **706**. If the computed threshold gradient is greater than the current gradient magnitude, then the comparator **700** will produce a logical zero upon the bus **706**. The lookup table **702** will then use the signals on bus **706** and the average local gray value associated with the pixel in question to produce a dynamic threshold associated with the pixel. The contents of the lookup table **702** are experimentally derived and associate a threshold value for every average local gray value of the pixel to be thresholded. In the preferred embodiment of this invention the dynamic threshold is approximately 102% of the average local gray value if the signal on bus **706** is a logical "one" and approximately 96% if it as logical "zero" in order to move the threshold up in an area having a relatively high contrast.

This dynamic threshold is output to the multiplexer **704** by signals on bus **708**. The dynamic threshold select signal on buses **688** and **696** which are coupled to the bus **496** then selects either a background gray-scale reference value or an output of the lookup table **702** to be output from the multiplexer via bus **710** as the background suppression threshold to be used with the pixel in question ("$P_{33}$" of FIG. 7).

Referring now to FIG. 14, there is shown further details of the remapper **714** of FIG. 7 as containing a remapped lookup table **714** having a first input coupled to the threshold present upon bus **710** and a second input coupled to the gray-scale value of the pixel in question which is present upon bus **490**. The remapped lookup table **714** then compares the threshold value present upon the bus **710** with the gray-scale value of the pixel **490** and produces an output pixel value which is four bits long on bus **716**.

Look up table **714** is used, in the preferred embodiment of this invention, to threshold each pixel **458** "P$_{33}$" upon bus **490**. This thresholding is used to decide whether to retain the pixel's current gray-scale value or turn it to white and simultaneously remap the pixel from a gray-scale range of 0 to 63 to a gray-scale range of 0 to 15.

Table **714** is created such that there is a separate remapping curve for each possible threshold associated with signals on line **710**. Each curve has the following property:

(a) an input pixel gray value greater than the pixel threshold is given an output gray-scale value of 15 (white) ;
(b) an input pixel gray value less than twenty five percent of the threshold on bus **710** is given an output gray-scale value of zero (black); and
(c) an input pixel gray value between the above two levels is given an output gray-scale value between 0 and 15.

This remapping is done to facilitate later ease of compression and scaling, and provides increased character contrast.

Referring now to FIG. 15, there is shown further details of the background gray-level updater **474** FIG. 8 as containing a comparator **720**, an AND gate **722**, a subtractor **724**, a latch **726**, a divisor **728**, and an adder **730**. Specifically, comparator **720** has a first input coupled to the computed threshold value signal on bus **710** and a second input coupled to the gray-scale associated with the pixel "P$_{33}$" by signals on bus **490**. Additionally, the subtractor **724** has a first input coupled to the gray-scale value of the pixel "P$_{33}$" by signals on bus **490** and a second input coupled to the background gray-scale reference value, currently used, by signals on bus **490**.

The dynamic threshold flag signal on bus **520** (which is coupled to bus **490**) is also coupled to AND gate **722** at a first input thereof. An output of comparator **720** is coupled by bus **732** to a second input of AND gate **722**, and an output of AND gate **722** is coupled to the control latch **726** by bus **734**. An output of subtractor **724** is coupled to divisor **728** by bus **736** and an output of divisor **728** is coupled to a first input of adder **730** by signals on bus **738**. An output of adder **730** is coupled to the latch **732** by signals on bus **740**. Additionally, the adder **730** has a second input coupled to the background reference gray-scale value associated with signals on the **490**, and the divisor **728** has a second input coupled to the background gray-scale reference update factor on bus **490**. The background reference gray-scale update factor (signal **482**) is empirically determined and loadable to image processor **24** through input/output controller **56**. The new background reference factor is output from latch **726** and placed on bus **742**.

In the preferred embodiment of this invention, the background reference update factor is determinative of how much of the difference between the current reference value (on bus **490**) and the pixel **458** (i.e., "P$_{33}$") will be added to the current reference value to form a new reference value. It has been determined that a continued updating of the reference value yields more accurate results. The preferred embodiment of this invention uses a value of 4 for the background reference update factor.

In operation, the background reference gray-scale value will be updated by the cooperation of the comparator **720**, subtractor **224**, divisor **728,** and adder **730**. This background reference gray-scale updated value will be output if a signal on bus **734** enables this to occur. Specifically, the subtractor **724** will subtract the background gray-scale reference value from the gray-scale value of the pixel **458** (e.g., pixel "P$_{33}$") and output the value upon the bus **736** to the divisor **728**. The divisor **728** will divide the subtracted value by the background reference gray-scale value update factor which appears upon bus **490** and outputs this divided value via bus **738** to the adder **730**. The adder **730** will then add the updated value to the current, existing gray-scale reference value (i.e., signal **482**) and outputs the updated value upon the bus **740** to the input of latch **726**. The data will not be accepted by latch **726** until signal on bus **734** is logically high. That is, in order for the latch **726** to input the updated gray-scale value therefrom, the signal upon the bus **490** and the signal upon the bus **732** must both be logically high. This, in turn, requires comparator **720** to determine that the gray-scale pixel value associated with the active pixel **458** (i.e., "P$_{33}$) appearing on bus **490** must be greater than the computed threshold value on bus **710**. Additionally the dynamic thresholding signal on buses **490** and **520** must also be logically high. If these two aforementioned conditions are met, then the signal upon bus **734** is logically high and allows the latch **726** to output the updated gray-scale reference value, which is present upon the bus **742**, therefrom.

## 6. Scaling

Referring now to FIG. 16, the scaling subprocessor block **64**, which is used to modify the resolution of the image (i.e. by changing its dimension), contains a scanline counter **772** and a scaling processor **774**. The counter **772** is coupled to an end-of-scan signal on bus **108** (FIG. 3) and generates a single count for every "end-of-scan" pulse that appears on bus **108**, thereby producing (on bus **776**) a running identification of the columns associated with the acquired image. Bus **776** is coupled to an input of scaling processor **774**. Additionally, the scaling processor **774** is coupled to row count signals on bus **104** (FIG. 3) and to bus **76**. Processor **774** uses the row counts, on bus **104,** and column counts, on bus **776** to correctly place the position of each of the pixels within the acquired image. The scaling processor **774** (which may be located off the image processing chip) uses the column count and row count associated with signals on busses **776** and **704**, respectively, to produce a scaled output.

Referring now to FIG. 17, there is shown a flowchart **800** which details the operation of the scaling processor **774** which, in the preferred embodiment of this invention, is microprocessor based. The initial step **802**, of flowchart **800,** is followed by step **804** which requires the scaling processor **774** to acquire the row and column counts of buses **776** and **104** respectively. Step **806** follows step **804** and requires the scaling processor **774** to select pixels of data from the RAM and shift window register assembly **50, 51**, by bus **76,** wherein these pixels are selected based upon the row in column counts on the buses **776** and **104** respectively.

Step **808** follows step **806** in which the scaling processor **774** processes the acquired pixels in a scaling usual manner and then outputs the processed data onto bus **809** (Fig. 16) to an output multiplexer **148**. In the preferred embodiment of this invention, the scaled output value associated with step **808** is a typical median scaled value of the selected pixels. This is proven to retain edge features better than standard averaging techniques. Step **808** is followed by step **804**. That is, three columns (i.e. **440, 442,** and **444**) of pixels and three rows (i.e. **450, 452,** and **454**) are processed by processor **774** at any instant of time. Processor **774** then discards the center pixel **458** and defines four quadrants as being defined by pixels "$P_{42}$", "$P_{32}$", and "$P_{43}$"; "$P_{22}$", "$P_{32}$", and "$P_{23}$"; "$P_{23}$", "$P_{24}$", and "$P_{34}$"; and "$P_{43}$", "$P_{44}$", and "$P_{34}$" respectively. Each quadrant is then assigned a single gray-scale value defined as the median of the gray-scale value of the pixels within each quadrant. Processor **774** then outputs one gray-scale value per quadrant at a time. This median scaling technique has proven to yield substantially sharper images then many prior scaling techniques.

## 7. Height Detection

Referring now to FIG. 18, there is shown more details of the document height detection subprocessor block **54** of FIG. 2 as containing a comparator **820**, a 5x1 bit shift register **822,** an AND gate **824,** a comparator **826**, an AND gate **828,** a pulse generator **830**, registers **832, 834, 836,** and **838,** a comparator **840,** a NOT gate **842,** and an AND gate **844**.

A first input of comparator **820** is coupled to video input data on bus **82** and a second input thereof is coupled to input/output controller **56** by bus **846** which carries signals representing a gray-scale background reference. The reference, in the preferred embodiment of this invention has a value of 14. Its purpose is to distinguish between track background and current image data. The comparator **820** compares the video input (on a pixel by pixel basis) to that of the background reference present on bus **846** in order to determine if the pixel is of a document or background type. If the video input signal on bus **82** is whiter than or equal to the background reference signal on bus **846,** then the comparator **820** issues a logical one upon bus **848** to the 5x1 bit shift register **822**. When the 5x1 bit shift register **822** contains five consecutive values of one therein, a signal on bus **850** to the AND gate **828** is transmitted. A document-present signal (emanating from a camera assembly 11 FIG. 1) is placed on bus **852** and is coupled to a second input of AND gate **828**. The trailing edge of the signal upon bus **852** is also input into pulse generator **830** which causes a single pulse to emanate therefrom on bus **854** which is coupled to registers **832, 834, 836,** and **838**.

The output of AND gate **828** is represented by signals on bus **856** which is coupled to a first input of AND gates **824** and **844**. A second input of AND gate **824** is coupled to an output of comparator **826** by signals on bus **858**. The comparator **826** has inputs coupled thereto which are represented by signals on bus **104** (FIG. 3) and an output of the register **832** which is represented by signals on the bus **860**.

In operation, when five consecutive bits are loaded into shift register **822** and the document-present signal upon bus **852** indicates a document is present, then AND gates issues a logically high command on bus **862** to the AND gates **824** and **844**. The AND gate **824** then will issue a signal on bus **862** as a load command to the register **832** in order to have the register **832** load the signals on bus **104** which is coupled thereto.

The load command will issue only if the comparator **826** determines that the contents of the bus **104** are greater than or equal to the contents of the output of the signal on the bus **860**, meaning that the document video image was found at a higher position than has previously been determined. This load command on the bus **862** will then cause register **832** to place the current address (on bus **104**) therein. The pulse signals on bus **854** will cause the contained value on bus **860** to be transferred to register **836** and cause register **832** to clear. The register **836** will then load the value associated with the signals on bus **860** due to the command associated with the pulse on bus 854 and output this value on bus **864** as an indication of the height of the document **16**. When the acquired image is captured by a camera assembly **11** which scans from the bottom of the document to the top thereof, another technique must be used to determine the document height.

To determine the document height of the document **16,** when the image acquisition system scans from the bottom to the top thereof, it is first necessary to couple the address, on bus **104,** to invertor **842** whose output is coupled to an input of the register **834** via bus **866**. This value is not loaded into register **866** until AND gate **844** issues a logically high command on bus **868** thereto. This logically high command will be issued if the input on bus **856** associated with the AND gate **824** is logically high, indicating an occurrence of five consecutive instances of logical ones in shift register **832** and if the output associated with the comparator **840** is logically high as well.

Specifically, comparator **840** compares the output of register **834** on bus **870** with the value of the output of invertor **842** on bus **866.** That is, if this inverted value on bus **866** is greater than or equal to the current address value of the register **834,** then signal on bus **841** is set to a logical one enabling register **834** to download data.

The pulse signals on bus **854,** coupled to registers **834** and **838,** and again, in cooperation with signal on bus **841,** allows register **834** to send its output data on signal on bus **870** to the register **838** and causes the register **838** to load the sent therein. Register **834** is then cleared to zero. Subsequently, the register **838** outputs the data upon bus **872**.

## 8. Spot/Void Filtering

The spot/void subprocessor **62** is used to fill in voids (i.e., areas of the acquired image having no gray level value associated therewith) and filter out spots (i.e. a dark pixel which is substantially surrounded by white pixels).

Referring now to FIG. 19, there is shown further details of the spot/void filtering subprocessor **62** as containing an averager **750**, a comparator **752**, and a look up table **754** (which may be externally placed from image processor **24**).

Averager **750** has an input coupled to the storage RAM **50** and window shift register window assembly **52** by signals on bus **760**. Averager **750** has an output coupled to the bypass multiplexer **148** by signals on bus **756**. The comparator **752** has first and second inputs coupled to input/output controller **56** by signals on buses **758** and an input coupled to the video on bus **82** respectively. An output of comparator **752** is coupled to the storage RAM and shift register window assembly by signals on bus **760.**

In operation, the spot/void filtering subprocessor block **62** is used to eliminate substantially all isolated white and black spots, voids, and protrusions from the acquired image. Initially, video image data is input via bus **82** to the RAM and shift register window assembly **50, 52** and thereafter to an input of comparator **752.** Comparator **752** then determines if each of the pixels associated with the acquired image is above a certain threshold defined by signals on bus **758**. This threshold is loaded through control unit input/output controller **56** and is empirically derived. In the preferred embodiment of the invention its value is 14.

This comparison then produces a binary image from the acquired gray-scale image. This binary image is sent to RAM and shift register window assembly **50, 52** by bus **760**. This binary bit patterned image is then output via bus **762** to a lookup table **754,** which generates a signal on bus **764** to the bypass multiplexer **148**. Additionally, the gray-scale image is sent via bus **76** to the averager **750** which produces an average value for each of the pixels **458** relative to the four pixels "$P_{32}$", "$P_{34}$", "$P_{34}$", and "$P_{43}$" surrounding it, and passes this average by bus **756** to the bypass multiplexer **148**. Also, the bypass multiplexer **148** has a white value entered into it by signals on bus **766** and a black value associated with signals on bus **768**. The active pixel **458** (i.e., "$P_{33}$" of FIG. 7) is also input into multiplexer **148** by bus **76.**

The lookup table **754**, generates output signals on bus **764** which are used to select which of the input signals (i.e., signals on buses **756, 766, 768,** or **76**) that are input to multiplexer **148** and are placed on bus **770**. The signal on bus **770** represents a new pixel value associated with the pixel **458** being processed and lookup table **754** selects the output of multiplexer **148** depending upon the bit pattern of the image containing the active pixel **458**. If the active pixel **458** represents a spot then white (signal on line **766**) is selected otherwise one of signals on lines **768, 82,** or **756** are selected based upon the empirically derived table.

## 9. Pipeline Configuration

Referring now to FIG. 20, there is shown a processing pipeline **800** plurality of substantially similar image processors **24(a-d)** arranged in a pipelined configuration. Each of the image processors **24(a), 24(b), 24(c),** and **24(d)** comprise separate application specific integrated circuits and contain all of the subprocessors **58, 60, 62,** and **64** shown in FIG. 2. Each processor **24(a), 24(b), 24(c),** and **24(d)** performs one of the functions associated with subprocessors **58, 60**, **62,** and **64**. This function is chosen by function select signal **168** (FIG. 4) and which may be activated by an external jumpering arrangement. Input video data on bus **82** enters processor **24** which, in one embodiment, performs a normalization operation thereon. This normalized processed video data is then sent to bus **802** by bypass multiplexer **148** therein and then to processor **24(b)** which performs background suppression thereon.

Processor **24(b)** then outputs the background suppressed data to processor **24(d)** by use of its multiplexer **148** and bus **804**. Processor **24(c)** receives the processed data, on bus **804,** and performs spot/void processing thereon. Processor **24(d)** then outputs this processed data on bus **806** to processor **24(c)** which performs a scaling function thereon and outputs the scaled data on bus **808** as processed data output. Therefore, the use of processors **24(a-d),** in the pipelined configuration **800**, allows for greater processing efficiency.

## Claims

1. An image processing system (10) where a document (16) is carried over a track (14) to a station where the document is scanned by a sensor (11) to create digital image data in a memory (50), said image processing system comprising a plurality of image processor means (24 (a)-(d)) wherein each image processor means (24 (a)-(d)) includes:

a pixel normalization subprocessor (58) for correcting defects in the sensed image data;
a background suppression subprocessor (60) for removing unwanted background from the image;
a filtering subprocessor (62) for deleting isolated dark and light spots of predetermined size from the image data;
an image scaling subprocessor (64) for reducing the size of the image;
a size detection subprocessor (54) for generating an output related to the size of the document; and
an input/output controller (56) coupled (72) to said subprocessors (54-64) for configuring said image processing system (10) in a pipelined assembly so that each image processor means (24 (a)-(d)) performs one of the functions associated with said subprocessors (58-64).

2. The system of claim 1 wherein said subprocessors (54-64) are connectable in a pipeline sequence, so that the output of one selected subprocessor is fed to an input of another selected subprocessor.

3. The system of claim 2 wherein:

said pixel normalization subprocessor (58) receives video input from the sensor (11) and provides an output to the background suppression subprocessor (60);
said background suppression subprocessor (60) provides an output to said filtering subprocessor (62); and
said filtering subprocessor provides a function output to said image scaling subprocessor (64).

4. The system of claim 2 or 3 wherein said input/output controller (56) is coupled in parallel to each of said subprocessors (54-64), and further includes a selector control (146) for connecting predetermined ones of said subprocessors (54-64) in a pipeline for sequential operation.

5. The system of anyone of claims 1 to 4 further comprising shift register assembly means (52) for temporarily accessing a window of pixel data, said window containing a center pixel and its neighbors.

6. The system of anyone of claims 1 to 5 wherein said size detection subprocessor (54) concurrently provides information relating to the height of the document (16) independent of the other subprocessors (56-64).

7. The system of anyone of claims 1 to 6 further comprising:

an application specific integrated circuit including first input means for receiving pixel data generated from the sensor (11) that scans the image and provides the image data in an array of rows and columns, and output means providing information about the locations of said pixel data within rows and columns of the scanned image, as well as said pixel data at outputs thereof, wherein said image scaling subprocessor (64) is coupled to said output means of said circuit.

8. The system of claim 7 wherein said application specific integrated circuit further includes

second input means for receiving a signal indicating an end of a scan line of said sensor (11);
said memory (50) for storing the pixel data;
address generator means (102) for generating an address for each pixel in a scan line; and
counter means (772) for identifying each of said end of scan line signals, regarding the placement of each of said pixels within said image data.

9. The system of anyone of claims 1 to 8, wherein said input/output controller (56) comprises a normalization pointer (130) for reading and writing to specific locations within said memory (50), a comparator (136) coupled to said normalization pointer (130), a write enable controller (132) coupled to said comparator (136), a plurality of parameter data registers (138) coupled to said write enable controller (132), a plurality of data registers (140) coupled to said write enable controller, a plurality of video registers (144) coupled to said data registers (140), and a bypass multiplexer (148) coupled to a selector control assembly (146).

10. The system of anyone of claims 1 to 9 wherein said digital image data for processing an image contains image formation data and background, the image being represented by an array of pixels, each pixel initially having a gray-scale value in a first preselected range of values, said background suppresion subprocessor (60) converting each pixel value to preselected values within a second range of values smaller than said first preselected range and including:

(a) background reference threshold means (474) for providing a background reference threshold value;

(b) dynamic threshold means (468) for providing a dynamic threshold value which is different from the background threshold value;

(c) enabler/selector means (470) for analyzing predetermined pattern of pixel values surrounding each pixel being converted and selecting the dynamic threshold value or background reference threshold value as a function of the analysis; and

(d) remapper means (472) for assigning a new value in said second range to each pixel in the image as a function of the relationship between the initial gray-scale pixel value and the selected threshold value.

11. The system of anyone of claims 1 to 10 wherein said image scaling subprocessor (64) further comprises:

first input means (82) for receiving pixel data;
second input means (108) for receiving a signal indicating an end of a scan line of said sensor (11) that generated the pixel data;
memory means (50, 52) for storing the pixel data;
address generator means (102) for generating an address for each pixel in a scan line;
counter means (772) for identifying each of said scan line signals; and
output means (770) for providing information regarding each of said scan lines, each of said generated addresses, and said pixel data.

12. The system of anyone of claims 1 to 11 wherein said size detection subprocessor (54) comprises:

means (826, 840) for defining a threshold;
detector means (820, 822) for generating an output in response to a predetermined consecutive number of pixels having values bearing a predetermined relationship to said threshold, said threshold being chosen so that pixel values bearing said predetermined relationship to said threshold should be associated with a track (14); document presence means (828) for generating an output in response to the presence of a document (16) in the station; and
circuit means (836, 838) for storing pixel position information and providing an output which is related to the dimension of the document (16) in response to outputs from the detector means (820, 822) and document presence means (828).

13. A method of processing video image data, comprising the steps of:

carrying a document (16) over a track (14) to a station where the document is scanned by a sensor (11) to create digital image data in a memory (50);

providing a plurality of image processor means (24 (a)-(d)) wherein each image processor means (24 (a)-(d)) includes a pixel normalization subprocessor (58) for correcting defects in the sensed image data, a background suppression subprocessor (60) for removing unwanted background from the image, a filtering subprocessor (62) for deleting isolated dark and light spots of predetermined size from the image data, an image scaling subprocessor (64) for reducing the size of the image, a size detection subprocessor (54) for generating an output related to the size of the document, and an input/output controller coupled (72) to said subprocessors (54-64); and

configuring said image processor means (24 (a)-(d)) in a pipelined assembly by means of said input/output controller (56) so that each image processor means (24 (a)-(d)) performs one of the functions associated with said subprocessors (58-64).

14. The method of claim 13 wherein said video image data contains image formation data and background, the image being represented by an array of pixels, each pixel initially having a gray-scale value, said method step of suppressing said background images comprises the steps of:

(a) selecting a background reference threshold value;
(b) selecting a dynamic threshold value which is different from the background threshold value;
(c) analyzing a predetermined pattern of pixel values surrounding each pixel being processed; and
(d) selecting the dynamic threshold value or said background reference threshold value as a function of the analysis.

15. The method of claim 13 or 14 wherein the step of scaling said video image data comprises the steps of:

generating an array of pixel data that uses a scanning image sensor (11) that provides an end of scan line signal at the end of each scan line;
generating an address for each pixel in a scan line;
storing each pixel in said address;
using said end of scan line signals and addresses to identify rows and columns in the image;
selecting predetermined pixels in the image; and

combining said pixels in a predetermined manner in order to scale down the image.

16. The method of anyone of claims 13 to 15 which further includes coupling a fifth image processor means (54) to said input/output controller (56) for detecting a dimension of a generally rectangular document (16) in a system in which the document (16) is carried over a track (14) to a station where the document is scanned by a sensor (11) to create a digital image thereof, the document (16) being scanned in a given direction over a scan line which includes a portion of the track (14), having a gray-scale value associated therewith, as well as the document (16), said method further comprising:

(a) providing a threshold having a gray-scale value bearing a predetermined relationship to said gray-scale value of said track (14);

(b) generating an output in response to a predetermined consecutive number of pixels having values bearing said predetermined relationship to said threshold;

(c) providing document presence means for generating an output in response to the presence of a document in the station; and

(d) providing circuit means, coupled to said document presence means, for storing pixel position information and providing an output which is related to the dimension of the document (16) in response to outputs from the detector means and document presence means.

## Patentansprüche

1. Bildverarbeitungssystem (10), in welchem ein Dokument (16) entlang einer Spur (14) zu einer Station transportiert wird, wo das Dokument von einem Sensor (11) abgetastet wird, um digitale Bilddaten in einem Speicher (50) zu erzeugen, wobei das Bildverarbeitungssystem mehrere Bildprozessoren (24 (a)-(d)) umfaßt, wobei jeder Bildprozessor (24 (a)-(d)) beinhaltet:

einen Bildpunkt-Normalisierungs-Subprozessor (58) zum Korrigieren von Fehlern in den erfaßten Bilddaten;
einen Hintergrund-Unterdrückungs-Subprozessor (60) zum Entfernen eines unerwünschten Hintergrundes aus dem Bild;
einen Filter-Subprozessor (62) zum Löschen isolierter dunkler und heller Punkte vorbestimmter Größe aus den Bilddaten;
einen Bildskalierungs-Subprozessor (64) zum Verringern der Größe des Bildes;
einen Größenerfassungs-Subprozessor (54) zum Erzeugen eines zu der Größe des Dokuments gehörenden Ausgangssignals; und
eine Eingabe/Ausgabe-Steuerung (56), welche an die Subprozessoren (54-64) gekoppelt ist (72) zum Konfigurieren des Bildverarbeitungssystems (10) in einer Pipeline-Anordnung, so daß jeder Bildprozessor (24 (a)-(d)) eine der den Subprozessoren (58-64) zugeordneten Funktionen ausführt.

2. System nach Anspruch 1, bei welchem die Subprozessoren (54-64) in einer Pipeline-Sequenz anschließbar sind, so daß das Ausgangssignal eines ausgewählten Subprozessors in einen Eingang eines anderen ausgewählten Subprozessors eingespeist wird.

3. System nach Anspruch 2, bei welchem der Bildpunkt-Normalisierungs-Subprozessor (58) von dem Sensor (11) eingegebene Bilddaten empfängt und ein Ausgangssignal für den Hintergrund-Unterdrückungs-Subprozessor (60) bereitstellt;

wobei der Hintergrund-Unterdrückungs-Subprozessor (60) ein Ausgangssignal für den Filter-Subprozessor (62) bereitstellt; und
der Filter-Subprozessor eine zu dem Bild-Skalierungs-Subprozessor (64) ausgegebene Funktion bereitstellt.

4. System nach Anspruch 2 oder 3, bei welchem die Eingabe/Ausgabe-Steuerung (56) parallel an jeden der Subprozessoren (54-64) gekoppelt ist und weiterhin eine Selektor-Steuerung (146) zum Anschließen vor bestimmter Subprozessoren (54-64) in einer Pipeline für einen sequentiellen Vorgang beinhaltet.

5. System nach einem der Ansprüche 1-4, mit einer Schieberegisteranordnung (52) zum vorübergehenden Zugreifen auf ein Fenster aus Bildpunktdaten, wobei das Fenster einen mittleren Bildpunkt und seine Nachbarn enthält.

6. System nach einem der Ansprüche 1-5, bei welchem der Größenerfassungs-Subprozessor (54) gleichzeitig zu der Höhe des Dokumentes (16) gehörende Informationen unabhängig von den anderen Subprozessoren (56-64) bereitstellt.

7. System nach einem der Ansprüche 1-6, mit:

einer anwendungsspezifischen integrierten Schaltung mit einer ersten Eingabeeinrichtung zum Empfangen von Bildpunktdaten, welche von dem Sensor (11) erzeugt werden, der das Bild abtastet und die Bildpunktdaten in einer Matrix aus Zeilen und Spalten bereitstellt, und einer Ausgabeeinrichtung zum Bereitstellen von Informationen über die Positionen der Bildpunktdaten innerhalb der Zeilen und Spalten des abgetasteten Bildes ebenso wie der Bildpunktdaten an seinen Ausgängen, wobei der Bild-Skalierungs-Subprozessor (64) an die Ausgabeeinrichtung der Schaltung gekoppelt ist.

8. System nach Anspruch 7, bei welchem die anwendungsspezifische integrierte Schaltung weiterhin beinhaltet:

eine zweite Eingabeeinrichtung zum Empfangen eines Signals, welches ein Ende einer Abtastzeile des Sensors (11) anzeigt;
den Speicher (50) zum Speichern der Bildpunktdaten;
einen Adressgenerator (102) zum Erzeugen einer Adresse für jeden Bildpunkt in einer Abtastzeile;
einen Zähler (772) zum Identifizieren von jedem der Abtastzeilenende-Signale, welche die Plazierung von jedem der Bildpunkte in den Bilddaten betreffen.

9. System nach einem der Ansprüche 1-8, bei welchem die Eingabe/Ausgabe-Steuerung (56) einen Normalisierungszeiger (130) umfaßt, zum Lesen und Schreiben an bestimmten Positionen innerhalb des Speichers (50), einen Komparator (136), welcher an den Normalisierungszeiger (130) gekoppelt ist, eine Schreibfreigabesteuerung (132), welche an den Komparator (136) gekoppelt ist, mehrere Parameterdatenregister (138), welche an die Schreibfreigabesteuerung (132) gekoppelt sind, mehrere Datenregister (140), welche an die Schreibefreigabesteuerung gekoppelt sind, mehrere Videoregister (144), welche an die Datenregister (140) gekoppelt sind, und einen Umgehungs-Multiplexer (148), welcher an eine Selektor-Steuerungsanordnung (146) gekoppelt ist.

10. System nach einem der Ansprüche 1-9, bei welchem die digitalen Bilddaten Bilddaten zum Verarbeiten eines Bildes Bild-Formationsdaten und Hintergrund enthalten, wobei das Bild durch eine Matrix aus Bildpunkten dargestellt ist, wobei jeder Bildpunkt anfangs einen Graustufenwert in einem ersten vorgewählten Bereich von Werten aufweist, wobei der Hintergrund-Unterdrückungs-Subprozessor (60) jeden Bildpunktwert in vorselektierte Werte innerhalb eines zweiten Bereiches von Werten umwandelt, welche kleiner als der erste vorselektierte Bereich ist, und mit:

(a) einer Hintergrund-Referenz-Schwellwerteinrichtung (474) zum Bereitstellen eines Hintergrund-Referenz-Schwellwertes;

(b) einer dynamischen Schwellwerteinrichtung (468) zum Bereitstellen eines dynamischen Schwellwertes, welcher sich von dem Hintergrund-Schwellwert unterscheidet;
(c) eine Freigabe/Selektier-Einrichtung (470) zum Analysieren vorbestimmter Muster von Bildpunktwerten, welche jeden Bildpunkt umgeben, der umgewandelt wird, und selektieren des dynamischen Schwellwertes oder des Hintergrund-Referenz-Schwellwertes als Funktion der Analyse; und
(d) einer Neuordnungseinrichtung (472) zum Zuordnen eines neuen Wertes in dem zweiten Bereich zu jedem Bildpunkt in dem Bild als eine Funktion der Beziehung zwischen dem anfänglichen Graustufen-Bildpunktwert und dem selektierten Schwellwert.

11. System nach einem der Ansprüche 1-10, bei welchem der Bild-Skalierungs-Subprozessor (64) weiterhin umfaßt:

eine erste Eingabeeinrichtung (82) zum Empfangen von Bildpunktdaten;
eine zweite Eingabeeinrichtung (108) zum Empfangen eines Signals, welches ein Ende einer Abtastzeile des Sensors (11) anzeigt, welcher die Bildpunktdaten erzeugt;
eine Speichereinrichtung (50, 52) zum Speichern der Bildpunktdaten;
einen Adressgenerator (102) zum Erzeugen einer Adresse für jeden Bildpunkt in einer Abtastzeile;
einen Zähler (772) zum Identifizieren von jedem der Abtastzeilensignale; und
eine Ausgabeeinrichtung (770) zum Bereitstellen von Informationen, welche jede der Abtastzeilen, jede der erzeugten Adressen und die Bildpunktdaten betreffen.

12. System nach einem der Ansprüche 1-11 bei welchem der Größenerfassungs-Subprozessor (54) umfaßt:

eine Einrichtung (826, 840) zum Festlegen eines Schwellwertes;
eine Erfassungseinrichtung (820, 822) zum Erzeugen eines Ausgangssignals als Reaktion auf eine vorbestimmte, aufeinanderfolgende Anzahl von Bildpunkten mit Werten, welche eine vorbestimmte Beziehung zu dem Schwellwert aufweisen, wobei der Schwellwert so gewählt ist, daß Bildpunktwerte, welche die vorbestimmte Beziehung zu dem Schwellwert aufweisen, einer Spur (14) zuzuordnen sind;
eine Dokumenten-Präsenz-Einrichtung (828) zum Erzeugen eines Ausgangssignals als Reaktion auf die Präsenz eines Dokuments (16) in der Station; und

eine Schaltung (836, 838) zum Speichern der Bildpunktpositionsinformation und Bereitstellen eines Ausgangssignals, welches zu der Abmessung des Dokuments (16) gehört, als Reaktion auf die Ausgangssignale von der Erfassungseinrichtung (820, 822) und der Dokumenten-Präsenz-Einrichtung (828).

13. Verfahren zum Verarbeiten von Video-Bilddaten, mit den Schritten:

Transportieren eines Dokumentes (16) entlang einer Spur (14) zu einer Station, wo das Dokument von einem Sensor (11) abgetastet wird, um digitale Bilddaten in einem Speicher (50) zu erzeugen;
Bereitstellen mehrerer Bildprozessoren (24(a)-(d)), wobei jeder Bildprozessor (24(a)-(d)) einen Bildpunkt-Normalisierungs-Subprozessor (58) zum Korrigieren von Fehlern inden erfaßten Bilddaten beinhaltet, einen Hintergrund-Unterdrückungs-Subprozessor (60) zum Entfernen eines unerwünschten Hintergrundes aus dem Bild, einen Filter-Subprozessor (62) zum Löschen isolierter dunkler und heller Punkte vorbestimmter Größe aus den Bilddaten, einen Bild-Skalierungs-Subprozessor (64) zum Verringern der Größe des Bildes, einen Größen-Erfassungs-Subprozessor (54) zum Erzeugen eines zu der Größe des Dokuments gehörenden Ausgangssignals, und eine an die Subprozessoren (54-64) gekoppelte (72) Eingabe/Ausgabe-Steuerung; und
Konfigurieren des Bildprozessors (24 (a)-(d)) in einer Pipeline-Anordnung durch die Eingabe/Ausgabe-Steuerung (56), so daß jeder Bildprozessor (24 (a)-(d)) eine der Funktionen ausführt, welche den Subprozessoren (58-64) zugeordnet sind.

14. Verfahren nach Anspruch 13,
bei welchem die Video-Bilddaten Bild-Formationsdaten und Hintergrund enthalten, wobei das Bild durch eine Matrix aus Bildpunkten dargestellt ist, wobei jeder Bildpunkt anfangs einen Graustufenwert aufweist, wobei der Verfahrensschritt, die Hintergrundbilder zu unterdrücken, die Schritte umfaßt:

(a) Selektieren eines Hintergrund-Referenz-Schwellwertes;
(b) Selektieren eines dynamischen Schwellwertes, welcher sich von dem Hintergrund-Schwellwert unterscheidet;
(c) Analysieren eines jeden verarbeiteten Bildpunkt umgebenden, vorbestimmten Musters aus Bildpunktwerten; und

(d) Selektieren des dynamischen Schwellwertes oder des Hintergrund-Referenz-Schwellwertes als Funktion der Analyse.

15. Verfahren nach Anspruch 13 oder 14,
bei welchem der Schritt, die Videobilddaten zu skalieren, die Schritte umfaßt:

Erzeugen einer Matrix aus Bildpunktdaten, welche einen Abtast-Bildsensor (11) verwendet, der ein Abtastzeilen-Endesignal am Ende jeder einzelnen Abtastzeile bereitstellt;
Erzeugen einer Adresse für jeden Bildpunkt in einer Abtastzeile;
Speichern jedes Bildpunktes bei der Adresse;
Verwenden der Abtastzeilen-Ende-Signale und der Adressen, um Zeilen und Spalten in dem Bild zu bestimmen;
Selektieren vorbestimmter Bildpunkte in dem Bild; und
Kombinieren der Bildpunkte in einer vorbestimmten Weise, um das Bild zu verkleinern.

16. Verfahren nach einem der Ansprüche 13 bis 15,
welches weiterhin eine Kopplung eines fünften Bildprozessors (54) an die Eingabe/Ausgabe-Steuerung (56) zum Erfassen einer Abmessung eines im wesentlichen rechtwinkligen Dokumentes (16) in einem System beinhaltet, in welchem das Dokument (16) entlang eine Spur (14) zu einer Station transportiert wird, in welcher das Dokument von einem Sensor (11) abgetastet wird, um ein digitales Bild davon zu erzeugen, wobei das Dokument (16) in einer vorgegebenen Richtung entlang einer Abtastzeile abgetastet wird, welche einen Teil der Spur (14) beinhaltet, mit einem diesem zugeordneten Graustufenwert, ebenso wie dem Dokument (16), wobei das Verfahren weiterhin umfaßt:

(a) Bereitstellen eines Schwellwertes mit einem Graustufenwert, welcher eine vorbestimmte Beziehung zu dem Graustufenwert der Spur (14) enthält;
(b) Erzeugen eines Ausgangssignals als Reaktion auf eine vorbestimmte, aufeinander folgende Anzahl von Bildpunkten mit Werten, welche die vorbestimmte Beziehung zu dem Schwellwert enthalten;
(c) Bereitstellen einer Dokumenten-Präsenz-Einrichtung zum Erzeugen eines Ausgangssignals als Reaktion auf die Präsenz eines Dokumentes in der Station; und
(d) Bereitstellen einer Schaltung, welche an die Dokumenten-Präsenz-Einrichtung gekoppelt ist, zum Speichern von Bildpunkt-Positionsinformationen und Bereitstellen eines Ausgangssignals, welches zu der Abmessung des Dokumentes (16) gehört, als Reaktion auf Ausgangssignale von der Erfassungseinrichtung und der Dokumenten-Präsenz-Einrichtung.

## Revendications

1. Système de traitement d'image (10) dans lequel un document (16) est transporté sur une piste (14) jusqu'à un poste où le document est balayé par un capteur (11) afin de créer des données d'image numériques dans une mémoire (50), ledit système de traitement d'image comprenant une pluralité de moyens de processeurs d'image (24(a) à (d)) dans lesquels chaque moyen de processeur d'image (24(a) à (d)) comprend :

   un sous-processeur de normalisation de pixel (58) destiné à corriger des défauts dans les données d'image détectées,
   un sous-processeur de suppression de fond (60) destiné à éliminer le fond indésirable de l'image,
   un sous-processeur de filtrage (62) destiné à effacer des taches sombres et claires isolées de taille prédéterminée dans les données d'image,
   un sous-processeur de mise à l'échelle d'image (64) destiné à réduire le format de l'image,
   un sous-processeur de détection de format (54) destiné à générer une sortie liée au format du document, et
   un contrôleur d'entrée/sortie (56) relié (72) auxdits sous-processeurs (54 à 64) afin de configurer ledit système de traitement d'image (10) en un ensemble en pipeline de sorte que chaque moyen de processeur d'image (24(a) à (d)) remplisse l'une des fonctions associées auxdits sous-processeurs (58 à 64).

2. Système selon la revendication 1, dans lequel lesdits sous-processeurs (54 à 64) peuvent être reliés suivant une séquence en pipeline, de sorte que la sortie d'un sous-processeur sélectionné soit appliquée à une entrée d'un autre sous-processeur sélectionné.

3. Système selon la revendication 2, dans lequel :

   ledit sous-processeur de normalisation de pixel (58) reçoit une entrée vidéo provenant du capteur (11) et applique une sortie au sous-processeur de suppression de fond (60),
   ledit sous-processeur de suppression de fond (60) applique une sortie audit sous-processeur de filtrage (62), et
   ledit sous-processeur de filtrage applique une sortie de fonction audit sous-processeur de mise à l'échelle d'image (64).

4. Système selon la revendication 2 ou 3, dans lequel ledit contrôleur d'entrée/sortie (56) est relié en parallèle à chacun desdits sous-processeurs (54 à 64), et comprend en outre une commande de sélecteur (146) destinée à relier des sous-processeurs prédéterminés parmi lesdits sous-processeurs (54 à 64) en un pipeline pour un fonctionnement séquentiel.

5. Système selon l'une quelconque des revendications 1 à 4, comprenant en outre un moyen d'ensemble de registres à décalage (52) destiné à accéder temporairement à une fenêtre de données de pixels, ladite fenêtre contenant un pixel central et ses pixels voisins.

6. Système selon l'une quelconque des revendications 1 à 5, dans lequel ledit sous-processeur de détection de format (54) fournit simultanément des informations se rapportant à la hauteur du document (16) indépendamment des autres sous-processeurs (56 à 64).

7. Système selon l'une quelconque des revendications 1 à 6, comprenant en outre :

   un circuit intégré spécifique à l'application comprenant un premier moyen d'entrée destiné à recevoir des données de pixels générées à partir du capteur (11) qui balaye l'image et fournit les données d'image suivant une matrice de lignes et de colonnes, et un moyen de sortie fournissant des informations concernant les emplacements desdites données de pixels à l'intérieur des lignes et des colonnes de l'image balayée, de même que lesdites données de pixels en tant que sorties de celui-ci, dans lequel ledit sous sous-processeur de mise à l'échelle d'image (64) est relié audit moyen de sortie dudit circuit.

8. Système selon la revendication 7, dans lequel ledit circuit intégré spécifique à l'application comprend en outre

   un second moyen d'entrée destiné à recevoir un signal indiquant une fin de ligne de balayage dudit capteur (11),
   ladite mémoire (50) destinée à mémoriser les données de pixels,
   un moyen de générateur d'adresse (102) destiné à générer une adresse pour chaque pixel d'une ligne de balayage, et
   un moyen de compteur (772) destiné à identifier chacun desdits signaux de fin de ligne de balayage, en considérant le positionnement de chacun desdits pixels à l'intérieur desdites données d'image.

9. Système selon l'une quelconque des revendications 1 à 8, dans lequel ledit contrôleur d'entrée/sortie (56) comprend un pointeur de normalisation (130) destiné à lire et à écrire à des emplacements particuliers à l'intérieur de ladite mémoire (50), un comparateur (136) relié audit pointeur de normalisation (130), un contrôleur de validation d'écriture (132) relié audit comparateur (136), une pluralité de registres de données de paramètres (138) reliés audit contrôleur de validation d'écriture (132), une pluralité de registres de données (140) reliés audit contrôleur de validation d'écriture, une pluralité de registres vidéo (144) reliés auxdits registres de données (140), et un multiplexeur de déroutement (148) relié à un ensemble de commande de sélecteur (146).

10. Système selon l'une quelconque des revendications 1 à 9, dans lequel lesdites données d'image numériques destinées au traitement d'une image contiennent des données de formation d'image et un fond, l'image étant représentée par une matrice de pixels, chaque pixel présentant initialement une valeur d'échelle de gris dans une première plage de valeurs présélectionnée, ledit sous-processeur de suppression de fond (60) convertissant chaque valeur de pixel en des valeurs présélectionnées à l'intérieur d'une seconde plage de valeurs plus petite que ladite première plage présélectionnée et comprenant :

(a) un moyen de seuil de référence de fond (474) destiné à fournir une valeur de seuil de référence de fond,
(b) un moyen de seuil dynamique (468) destiné à fournir une valeur de seuil dynamique qui diffère de la valeur de seuil de fond,
(c) un moyen de module de validation/sélecteur (470) destiné à analyser des motifs prédéterminés des valeurs des pixels entourant chaque pixel qui est converti et à sélectionner la valeur de seuil dynamique ou la valeur de seuil de référence de fond en fonction de l'analyse, et
(d) un moyen de module de remappage (472) destiné à affecter une nouvelle valeur dans ladite seconde plage à chaque pixel de l'image en fonction de la relation entre la valeur de pixel d'échelle de gris initiale et la valeur de seuil sélectionnée.

11. Système selon l'une quelconque des revendications 1 à 10, dans lequel ledit sous-processeur de mise à l'échelle d'image (64) comprend en outre :

un premier moyen d'entrée (82) destiné à recevoir des données de pixels,
un second moyen d'entrée (108) destiné à recevoir un signal indiquant une fin de ligne de balayage dudit capteur (11) qui a généré les données de pixels,
un moyen de mémoire (50, 52) destiné à mémoriser les données de pixels,
un moyen de générateur d'adresse (102) destiné à générer une adresse pour chaque pixel d'une ligne de balayage,
un moyen de compteur (772) destiné à identifier chacun desdits signaux de lignes de balayage, et
un moyen de sortie (770) destiné à fournir des informations concernant chacune desdites lignes de balayage, chacune desdites adresses générées, et lesdites données de pixels.

12. Système selon l'une quelconque des revendications 1 à 11, dans lequel ledit sous-processeur de détection de format (54) comprend :

un moyen (826, 840) destiné à définir un seuil,
un moyen de détecteur (820, 822) destiné à générer une sortie en réponse à un nombre de pixels consécutifs prédéterminé présentant des valeurs qui satisfont une relation prédéterminée avec ledit seuil, ledit seuil étant choisi de façon à ce que les valeurs des pixels satisfaisant ladite relation prédéterminée avec ledit seuil soient associés à une piste (14),
un moyen de présence de document (828) destiné à générer une sortie en réponse à la présence d'un document (16) dans le poste, et
un moyen de circuit (836, 838) destiné à mémoriser des informations de positions de pixels et à fournir une sortie qui est liée à la dimension du document (16) en réponse aux sorties provenant du moyen de détecteur (820, 822) et du moyen de présence de document (828).

13. Procédé de traitement de données d'image vidéo, comprenant les étapes consistant à :

transporter un document (16) sur une piste (14) jusqu'à un poste où le document est balayé par un capteur (11) afin de créer des données d'image numériques dans une mémoire (50),
prévoir une pluralité de moyens de processeur d'image (24(a) à (d)) dans lesquels chaque moyen de processeur d'image (24(a) à (d)) comprend un sous-processeur de normalisation de pixel (58) destine à corriger des défauts dans les données d'image détectées, un sous-processeur de suppression de fond (60) destiné à éliminer le fond indésirable de l'image, un sous-processeur de filtrage (62) destiné à effacer des taches sombres et claires isolées de taille prédéterminée dans les données d'image, un sous-processeur de mise à l'échelle d'image (64) destiné à réduire le format de l'image, un sous-processeur de détection de format (54) destiné à générer une sortie liée au format du document, et un contrôleur d'entrée/sortie relié (72) auxdits sous-processeurs (54 à 64), et configurer lesdits moyens de processeurs d'image (24(a) à (d)) en un ensemble en pipeline au moyen dudit contrôleur d'entrée/sortie (56) de sorte que chaque moyen de processeur d'image (24 (a) à (d)) remplisse l'une des fonctions associées auxdits sous-processeurs (58 à 64).

14. Procédé selon la revendication 13, dans lequel lesdites données d'image vidéo contiennent des données de formation d'image et un fond, l'image étant représentée par une matrice de pixels, chaque pixel présentant initialement une valeur d'échelle de gris, ladite étape du procédé consistant à supprimer lesdites images de fond comprend les étapes consistant à :

(a) sélectionner une valeur de seuil de référence de fond,
(b) sélectionner une valeur de seuil dynamique qui diffère de la valeur de seuil de fond,
(c) analyser un motif prédéterminé de valeurs de pixels entourant chaque pixel qui est traité, et
(d) sélectionner la valeur de seuil dynamique ou ladite valeur de seuil de référence de fond en fonction de l'analyse.

15. Procédé selon la revendication 13 ou 14, dans lequel l'étape consistant à mettre à l'échelle lesdites données d'image vidéo comprend les étapes consistant à :

générer une matrice de données de pixels qui utilise un capteur d'image à balayage (11) qui fournit un signal de fin de ligne de balayage à la fin de chaque ligne de balayage,
générer une adresse pour chaque pixel d'une ligne de balayage,
mémoriser chaque pixel dans ladite adresse,
utiliser lesdits signaux de fin de ligne de balayage et les adresses pour identifier des lignes et des colonnes dans l'image,
sélectionner des pixels prédéterminés dans l'image, et
combiner lesdits pixels d'une manière prédéterminée de manière à diminuer l'échelle de l'image.

16. Procédé selon l'une quelconque des revendications 13 à 15, comprenant en outre la liaison d'un cinquième moyen de processeur d'image (54) audit contrôleur d'entrée/sortie (56) en vue de détecter une dimension d'un document de forme générale rectangulaire (16) dans un système dans lequel le document (16) est transporté sur une piste (14) jusqu'à un poste où le document est balayé par un capteur (11) afin de créer une image numérique de celui-ci, le document (16) étant balayé suivant une direction donnée sur une ligne de balayage qui comprend une partie de la piste (14), présentant une valeur de gris qui lui est associée, de même que le document (16), ledit procédé comprenant en outre les étapes consistant à :

(a) prévoir un seuil présentant une valeur d'échelle de gris qui satisfait une relation prédéterminée avec ladite valeur d'échelle de gris de ladite piste (14),
(b) générer une sortie en réponse à un nombre de pixels consécutifs prédéterminé présentant des valeurs qui satisfont ladite relation prédéterminée avec ledit seuil,
(c) prévoir un moyen de présence de document destiné à générer une sortie en réponse à la présence d'un document dans le poste, et
(d) prévoir un moyen de circuit, relié audit moyen de présence de document, afin de mémoriser des informations de positions de pixels et de fournir une sortie qui est liée à la dimension du document (16) en réponse aux sorties provenant du moyen de détecteur et du moyen de présence de document.

FIG. 1.

FIG. 2.

FIG. 3.

EP 0 447 541 B1

FIG. 4.

FIG. 5.

300

301 — **Start**

302 — Obtain Image

304 — Initialize Dynamic/ Fixed Threshold Memory

306 — Extract Data From Window

308 — Let P = 1

310 — For Pth Pixel Of Obtained Image — Update Gradient Histogram

Let P = P + 1 — 312

314 — Is Scan Line Ended ? — Yes

No

Compute New Gradient Threshold — 316

318 — Are All Pixels Of Image Operated Upon ?

No

Yes

320 — Let P = 1

Check For Fixed Or Dynamic Thresholding — 322

Calculate/Select The Pixel Threshold — 324

326 — Threshold And Remap Pixel

Update Background Gray Level Reference — 328

Store In Dynamic/ Fixed Threshold Memory

330 — Let P = P + 1 — 332

Have All Pixels Been Operated On ? — 334

No

Yes

FIG. 6

| | | | | |
|---|---|---|---|---|
| $P_{51}$ | $P_{41}$ | $P_{31}$ | $P_{21}$ | $P_{11}$ |
| $P_{52}$ | $P_{42}$ | $P_{32}$ | $P_{22}$ | $P_{12}$ |
| $P_{53}$ | $P_{43}$ | $P_{33}$ | $P_{23}$ | $P_{13}$ |
| $P_{54}$ | $P_{44}$ | $P_{34}$ | $P_{24}$ | $P_{14}$ |
| $P_{55}$ | $P_{45}$ | $P_{35}$ | $P_{25}$ | $P_{15}$ |

448 — 450 — 452 — 454 — 456 —

458

52

438  440  442  444  446

FIG. 7.

60

Window — 52

Stroke Edge Detector — 466

492

Thresholding Enabler — 468

488

496

B Ref Update Factor — 482

∇ Peak % — 484

Exit Stroke Grad. Thresh. — 486

Background Suppression Arithmetic/ Control Assembly — 460

478

490

Threshold Selector — 470

498

494

480

Histogram Counter Controller — 462

Histogram Counters — 464

472

Remapper

500

716

Background Gray Level Updater — 474

FIG. 8.

30

Dynamic/Fixed Threshold Memory — 518

460

520 — 522 → DTF

→ Threshold

Background Suppression Arithmetic Unit 502

504

∅

536

Comparator 506 — 524

528

530

8 538

Comparator 512 — 526

534

464

508

Divisor 510

514

Counter Controller 462 — 532

Histogram Counters

FIG. 9

550

Start — 552

Find Histogram Peak — 554

Compute Cutoff Value — 556

Search For The First Counter Having Contents Less Than Or Equal To The Cutoff Value — 558

Compute Gradient Threshold Select — 560

562 — End

FIG. 10

FIG. 11.

FIG. 14.

FIG. 15.

DTF

Latch → DTF Disable

ΔLC_IN

ΔLC_OUT

Pixel

B Ref.

Comparator

|∇̄|

Exit Stroke
Grad. Thresh.

|∇̄_P|

Comparator

Comparator

∇̄_H

"O"

∇̄_HP

Comparator

Comparator

FIG. 12.

Select

Comparator

LUT
702

MUX → Selected
Threshold

FIG. 13.

FIG. 16.

FIG. 17.

FIG. 18.

FIG. 19.

FIG. 20.